Europäisches Patentamt

European Patent Office

Office européen des brevets

(19)

(11) Veröffentlichungsnummer : **0 279 177 B1**

# (12) EUROPÄISCHE PATENTSCHRIFT

(45) Veröffentlichungstag der Patentschrift :
06.03.91 Patentblatt 91/10

(51) Int. Cl.$^5$ : **F16K 25/02, F16K 37/00, F16K 1/44**

(21) Anmeldenummer : 88100531.8

(22) Anmeldetag : 15.01.88

(54) Ventil mit einem gesteuerten Leckageraum.

Verbunden mit 88901038.5/0299029
(europäische
Anmeldenummer/Veröffentlichungsnummer)
durch Entscheidung vom 28.02.90.

(30) Priorität : 16.01.87 DE 3701027

(43) Veröffentlichungstag der Anmeldung :
24.08.88 Patentblatt 88/34

(45) Bekanntmachung des Hinweises auf die
Patenterteilung :
06.03.91 Patentblatt 91/10

(84) Benannte Vertragsstaaten :
AT BE CH DE ES FR GB IT LI LU NL SE

(56) Entgegenhaltungen :
EP-A- 0 039 319
DE-A- 2 523 202
DE-A- 3 017 084
DE-U- 8 524 858
FR-A- 2 300 946
US-A- 2 772 068

(73) Patentinhaber : Mieth, Hans Otto, Dipl.-Ing.
Sandkrug 3
W-2058 Schnakenbek (DE)

(72) Erfinder : Mieth, Hans Otto, Dipl.-Ing.
Sandkrug 3
W-2058 Schnakenbek (DE)

(74) Vertreter : Glaeser, Joachim, Dipl.-Ing. et al
Patentanwalt Königstrasse 28
W-2000 Hamburg 50 (DE)

**Beschreibung**

Die Erfindung betrifft ein Ventil mit einem gesteuerten Leckageraum nach dem Oberbegriff des Hauptanspruchs.

Es ist eine Vielzahl von Ventilen bekannt, bei denen zwei Abdichtungsstellen vorgesehen sind. Diese Abdichtungsstellen sind seriell angeordnet und verhindern in der Schließstellung des Ventils das Überströmen von Fluiden von einem Ventilgehäuseteil in ein anderes. Allen derartigen Ventilen ist gemeinsam, daß sie einen Leckageraum besitzen, der zwischen den beiden Abdichtungsstellen angeordnet ist und in den Innenraum des Ventilgehäuses ausmündet. Grundsätzlich kann dieser Leckageraum in dem Schließkörper bzw. in den Schließkörpern des Ventils oder in dessen bzw. deren Gehäuse angeordnet werden. In jedem Falle befindet sich der Leckageraum-Eintritt jeweils im Bereich des Innenraumes der Ventilgehäuseteile und wird bei allen bekannten Ventilen der in Rede stehenden Art in der Schließstellung des Ventils durch den bzw. die Schließkörper oder das Hauptstellorgan geschlossen. Der Leckageraum-Austritt ist am Schließkörper bzw. an den Schließkörpern oder am Ventilgehäuse ausgebildet.

Nachfolgend werden einige bekannte Ventile mit zwei Abdichtungsstellen nach typischen Merkmalen und Eigenschaften analysiert.

Es handelt sich um das Ventil gemäß dem deutschen Gebrauchsmuster 77 02 634, der EP-A- 00 98 418, der EP-A- 02 05 627, der DE-A- 25 05 544, der DE-A- 22 20 589 und der DE-A- 35 16 128. Darüber hinaus ist ein Ventil der einleitend gekennzeichneten Gattung unter der Bezeichnung VPL "SAFE-FLOW" Valves aus einer Firmendruckschrift der PASILAC FLOW EQUIPMENT A/S (im folgenden kurz "PASILAC") bekannt geworden.

Die bekannten Ventile gemäß GM 77 02 634, EP-A- 00 98 418 und EP-A- 02 05 627 weisen jeweils zwei Schließglieder auf, von denen entweder beide als Sitzteller (GM 77 02 634), beide als Schieber (EP-A- 00 98 418) oder ein Schließglied als Sitzteller und das andere als Schieber (EP-A- 02 05 627) ausgebildet sind. Die bekannten Ventile gemäß DE-A- 25 05 544, DE-A- 22 20 589, PASILAC und DE-A- 35 16 128 besitzen jeweils nur ein einziges Schließglied, wobei die ersten drei Vertreter über jeweils einen Sitzteller verfügen ; der letztgenannte weist einen Schieber auf.

Man ersieht aus den vorgenannten Druckschriften weiterhin, daß in allen Fällen der Leckageraum-Eintritt in Schließstellung des Ventils durch den Schließkörper bzw. das Hauptstellorgan geschlossen ist.

Bei den Ventilen gemäß GM 77 02 634, EP-A- 00 98 418 und EP-A- 02 05 627 befindet sich der Leckageraum-Austritt jeweils in einem der beiden Schließkörper, bei dem Ventil gemäß DE-A- 25 05 544 im einzigen Schließkörper. Bei den Ventilen gemäß DE-A- 22 20 589, PASILAC und DE-A- 35 16 128 ist der Leckageraum-Austritt im Gehäuse ausgebildet.

In der Offenstellung des Ventils ist der Leckageraum-Austritt, ausweislich der Fundstelle, nur bei dem Ventil gemäß DE-A- 25 05 544, PASILAC und DE-A- 35 16 128 durch ein Nebenstellorgan geschlossen. Bei allen anderen vorgenannten bekannten Ventilen ist ein derartiger Verschluß zwar grundsätzlich möglich, jedoch nicht explizit angegeben.

Neben der normalen Schaltfunktion (auf/zu) und in Verbindung mit der vorgenannten Eigenschaft, in der Schließstellung des Ventils das Überströmen von Fluiden von einem Ventilgehauseteil in ein anderes zu verhindern, stellt die Praxis, insbesondere bei Anwendungen im Nahrungsmittelund Getränkebereich, in der Pharmazie und in der Chemie, weitergehende Anforderungen an derartige Ventile, die einzeln oder in ihrer Summe vorliegen müssen. So ist es vielfach wünschenswert, daß der Leckageraum und die Sitzflächen des Ventils, einzeln und voneinander unabhängig, durch Anlüften des jeweils infrage kommenden Schließgliedes reinigbar sind. Diese Eigenschaft weisen beispielsweise die bekannten Ventile gemäß GM 77 02 634 bzw. EP-A- 02 05 627 auf.

Oft ist es weiterhin wünschenswert, daß der Leckageraum nicht nur in der Schließstellung des Ventils, sondern auch in seiner Offenstellung durch von außerhalb des Ventils herangeführte Reinigungsflüssigkeit reinigbar ist. Derartige Vorkehrungen sind bei den bekannten Ventilen gemäß GM 77 02 634, EP-A- 00 98 418 und EP-A- 02 05 627 gegeben.

Aus Sicherheitsgründen ist es oft erforderlich, daß Druckstöße und Druckschläge in den Leckageraum abgebaut werden durch bewußt toleriertes Aufdrücken und damit Öffnen einer Abdichtungsstelle des Ventils. Diese Eigenschaft (sog. Druckentlastungsleckage" durch Aufdrücken des Ventils gegeben) weisen grundsätzlich Ventile auf, die über zwei als Sitzteller ausgebildete Schließglieder verfügen (GM 77 02 634); beim Ventil gemäß EP-A- 02 05 627 ist eine Druckentlastungsleckage grundsätzlich in einer Richtung über das als Sitzteller ausgebildete Schließglied gegeben. Am Ventil gemäß DE-A- 35 16 128 ist am einzigen Schließglied ein sogenannter Ausgleichskolben angeordnet, der bewirkt, daß durch Druckstöße im System, die er nicht mindern oder abbauen kann, eine Verschiebung des Schließgliedes in eine Offen- oder Teiloffenstellung verhindert wird. Derartige Ausgleichskolben weisen aber andere erhebliche Nachteile hinsicht-

EP 0 279 177 B1

lich Abdichtung und Reinigung der Abdichtung auf, so daß sie nach Möglichkeit vermieden oder durch weitere zusätzliche Maßnahmen einsetzbar gemacht werden.

Eine letzte und in bestimmten Anwendungsfällen erforderliche Eigenschaft der vorstehend diskutierten Ventile ist das leckagefreie Schalten sowohl bei der Öffnungs- als auch bei der Schließbewegung des Ventils. Die sogenannte "Schaltleckage", die über eines der Ventilgehäuseteile dann in den Leckageraum eintritt, wenn während des Schaltvorganges eine Verbindung zwischen letzterem und dem Innenraum der Ventilgehäuseteile gegeben ist, wird lediglich bei den bekannten Ventilen gemäß EP-A- 00 98 418 und EP-A- 02 05 627 verhindert.

Man erkennt aus der vergleichenden Analyse des Standes der Technik, daß nur die bekannten Ventile, bei denen zwei Schließglieder vorgesehen sind, maximal drei der vier vorstehend erwähnten wünschenswerten bzw. erforderlichen Eigenschaften aufweisen (GM 77 02 634 und EP-A- 02 05 627 mit drei Eigenschaften ; EP-A- 00 98 418 mit zwei Eigenschaften). Beim Ventil gemäß DE-A- 35 16 128, das nur einen Schließkörper aufweist, ist nur eine der Eigenschaften gegeben. Bei den vorgenannten Ventilen ist selbstverständlich der Aufwand, der mit der Anordnung und dem Antrieb von zwei Schließgliedern notwendig ist, relativ hoch. Die Ventile gemäß DE-A- 25 05 544, DE-A- 22 20 589 und PASILAC weisen keine der vorgenannten Eigenschaften auf. Beim Ventil gemäß PASILAC und DE-A- 35 16 128 ist von Nachteil, daß in der Offenstellung des Ventils der Leckageraum-Austritt durch ein zusätzlich erforderliches Nebenstellorgan geschlossen werden muß, da ansonsten Produkt aus dem Ventilgehäuse in die Umgebung austreten würde.

Ausgehend vom aufgezeigten Stand der Technik liegt der Erfindung die Aufgabe zugrunde, bei einem Ventil der einleitend gekennzeichneten Gattung, neben der in der Schließstellung des Ventils an sich bekannten Steuerung der Verbindung zwischen dem Leckageraum und dem Innenraum der Ventilgehäuseteile, letzteren auch in anderen Stellungen des Ventils zu steuern.

Diese Aufgabe wird durch die Kennzeichenmerkmale des Anspruchs 1 gelöst.

Vorteilhafte Ausführungsformen des Ventils sind Gegenstand der abhängigen Ansprüche 2 bis 38.

Die mit der Erfindung erzielten Vorteile bestehen insbesondere darin, daß das erfindungsgemäß vorgeschlagene Ventil im wesentlichen alle vorstehend erwähnten wünschenswerten bzw. erforderlichen Eigenschaften in ihrer Gesamtheit prinzipiell zu realisieren vermag, obgleich sie nur mit einem einzigen Schließglied für den Hauptdurchgang durch das Ventil ausgestattet ist.

Insofern kommt der Erfindungsgegenstand mit einem Minimum an Bauteilen aus. Dadurch, daß die Verbindung zwischen dem Leckageraum und dem Innenraum auch in anderen Stellungen als in der Schließstellung des Ventils erfindungsgemäß durch ein Verschlußteil verschlossen wird, wird vermieden, daß der Leckageraum in diesen Stellungen zu einem Bestandteil des Produktraumes bzw. -weges umfunktioniert wird. Demzufolge können die Anforderungen an seine räumliche Gestaltung so gering wie möglich gehalten werden. Darüber hinaus ist erkennbar, daß die Bewegung des Verschlußteiles in unmittelbarer Abhängigkeit vom Schließglied erfolgt oder aber, bei dessen relativer Beweglichkeit zum Schließglied, in logischer Abhängigkeit von diesem.

Bemerkenswert ist weiterhin darüber hinaus, daß das erfindungswesentliche Merkmal sowohl auf einen Gegenstand anwendbar ist, bei dem das Schließglied durch translato rische Verschiebung im Ventilgehäuse bewegt wird als auch auf einen Gegenstand, bei dem es rotativ bewegt wird. Im letztgenannten Fall spricht man auch von einem Drehschieber ; die Praxis hat für derartige Ventile auch den Ausdruck "Scheibenventile" geprägt. Die Ausführungsform des Ventils zur Reinigung seiner dynamisch beanspruchten Dichtungsanordnung stellt nun erstmals bei der Verwendung von Dichtungen mit vorzugsweise kreisförmigem Querschnitt sicher, daß eine sichere und umfassende Reinigung aller Bereiche der Dichtung und seiner Nuten möglich ist. Dies wird zum einen durch die Zugänglichkeit der Dichtungen für die Reinigungsflüssigkeit von den Seiten der Nutenflanken, die flüssigkeitsdurchlässig ausgebildet sind, erreicht und zum anderen durch die begrenzte Beweglichkeit der Dichtungen in Richtung der Bewegung des Schließgliedes bzw. der Ventilstange.

Darüber hinaus ist erkennbar, daß die Bewegung des Verschlußteiles in unmittelbarer Abhängigkeit vom Schließglied erfolgt oder aber, bei dessen relativer Beweglichkeit zum Schließglied, in logischer Abhängigkeit von diesem.

Bei dem vorgeschlagenen Ventil ist sowohl die Leckageraumreinigung als auch die sogenannte Sitzreinigung durch Anlüften des Schließgliedes oder des Verschlußteils möglich. Erfolgt diese Reinigungsvariante über die Bewegung des Schließgliedes, dann befindet sich das Ventil in einer Schließstellung, während eine entsprechende Bewegung des Verschlußteils die Leckageraumreinigung oder die Sitzreinigung in der Offenstellung ermöglicht.

Wird nach einer alternativen Ausgestaltung des Ventils gemäß der Erfindung das Verschlußteil mit dem Schließglied fest verbunden, so ist ein nahezu leckagefreies Schalten während der Schließbewegung

3

dadurch möglich, daß entweder die zwischen dem Innenraum des Ventilgehäuses und dem Leckageraum zeitweise gegebene Verbindung oder die Austrittsöffnung des Leckageraumes durch steuerbare, von der Bewegung des Schließgliedes unmittelbar oder mittelbar betätigte Verschlußmittel geschlossen ist. Ein nahezu leckagefreies Schalten bei einem Ventil mit der vorgenannten Schließgliedkonfiguration wird auch mit sehr einfachen Mitteln - allerdings unter Verzicht auf den höchstmöglichen Sicherheitsstandard - unter anderem durch die Anordnung eines höhengleichen Steuersteges zwischen dem Schließglied und dem Verschlußteil erreicht.

Die sog. "Schaltleckage" ist durch die vorstehend vorgeschlagenen Maßnahmen zwar nicht absolut zu verhindern, wie dies beim lackagefreien Schalten mit uneingeschränkter relativer Beweglichkeit zwischen Schließglied und Verschlußteil der Fall ist, sie ist jedoch durch diese Maßnahmen in vielen Anwendungsfällen auf ein tolerierbares Maß zu begrenzen. Man spricht daher in diesem Fall treffender von einem "leckagebegrenzten" Schalten.

Falls das Verschlußteil, wie es eine vorteilhafte Ausführungsform des Ventils vorsieht, als zylinderförmiger, ringförmiger Körper ausgebildet ist, der gegenüber den Abdichtungsstellen die diesbezügliche Form und die Abmessungen des Schließgliedes aufweist, und dessen Durchtrittsöffnung, gemäß einer weiteren vorteilhaften Ausbildung des Ventils, zweckmäßig dem Nennquerschnitt des Ventils entspricht, ergibt sich in Verbindung mit der vorteilhaften Anordnung gehäuseseitig angeordneter Dichtungen eine Gesamtanordnung, bei der die Dichtungen in anderen Stellungen als in der Schließstellung des Ventils mit Produkt- oder Reinigungsflüssigkeit kaum beaufschlagt sind und damit kaum einem diesbezüglichen Verschleiß unterliegen.

Wird das Verschlußteil mit dem Schließglied in einem Abstand fest verbunden, so ergibt sich, wie dies eine weitere vorteilhafte Ausführungsform des Ventils vorsieht, eine Anordnung, die hinsichtlich des Antriebes des Ventils außerordentlich einfach ist, da lediglich das Schließglied betätigt werden muß. Es ist darüber hinaus strömungstechnisch vorteilhaft, wenn der zwischen dem Schließglied und dem Verschlußteil nutzbare Durchtrittsquerschnitt dem Nennquerschnitt des Ventils entspricht.

Wird das Verschlußteil, wie dies eine andere alternative Ausführungsform des Ventils vorsieht, relativ beweglich zum Schließglied in Richtung dessen Bewegungsfreiheitsgrades angeordnet, so wird in diesem Zusammenhang erfindungsgemäß vorgeschlagen, das Verschlußteil mit einer Stange zu verbinden, die aus dem jeweils zugeordneten Ventilgehäuseteil herausgeführt ist. Prinzipiell lassen sich die zur Betätigung des Schließgliedes notwendige Stange und jene des Verschlußteils in gleicher oder in entgegensetzter Richtung aus dem Ventilgehäuse herausführen. Im erstgenannten Fall sieht eine vorteilhafte Weiterbildung des Ventils gemäß der Erfindung vor, daß die Stange des Verschlußteils auf bzw. in der das Schließglied betätigenden Stange gelagert ist. Dadurch ist nur eine Stangendurchführung im Ventilgehäuse notwendig.

Eine andere Ausführungsform des Ventils gemäß der Erfindung begnügt sich ebenfalls mit einer einzigen Stangendurchführung im Ventilgehäuse, da allein das Schließglied zwangsweise betätigt werden muß und das Verschlußteil im oder am Schließglied geführt ist. Eine Feder zwischen Schließglied und Verschlußteil oder zwischen dem Ventilgehäuse und dem Verschlußteil bewirkt eine Mitnahme des Verschlußteils in Richtung der Schaltbewegung des Schließgliedes. Um zu verhindern, daß das Verschußteil in der Offenstellung des Ventils über seinen Sitzbereich hinaus verschoben wird, ist an ihm ein Anschlag vorgesehen.

Hinsichtlich der Anordnung des Verschlußteils im Bezug auf das Schließglied sind bei der letztgenannten Ausführungsform sämtliche bereits vorgenannten Grundsatzlösungen ebenfalls möglich. Bezüglich der Lage von Verschlußteil und Schließglied zueinander ergibt sich allerdings im Vergleich zu den Lösungen, bei denen beide Ventilstangen in den Außenbereich des Ventils herausgeführt sind, eine Einschrankung. Diese besteht darin, daß in der Schließstellung des Ventils das Schließglied und das Verschlußteil nicht in einem einen umlaufenden Spalt bildenden Abstand voneinander angeordnet sind, wie dies bei einer anderen Ausführungsform des Ventils gemäß der Erfindung mit zwei in den Außenbereich des Ventils herausgeführten Stangen sichergestellt ist. Falls dieser Nachteil, der innerhalb des Ventilgehäuses zur sogenannten Pfützen-oder Dombildung im Bereich der Kontaktstelle zwischen dem Verschlußteil und dem Schließglied führt, unerwünscht oder nicht tolerierbar ist, kann durch eine andere Weiterbildung des Ventils gemäß der Erfindung dieser Nachteil beseitigt werden. Zu diesem Zweck ist vorgesehen, daß die Stange des Verschlußteils, mit der dieses im oder am Schließglied geführt ist, mit einem Antriebskolben verbunden ist, der innerhalb des Schließgliedes dichtend geführt ist und mit letzterem einen Antriebsraum begrenzt, der über die Stange des Schließgliedes mit einem Druckmittelanschluß in Verbindung steht. Durch Ansteuerung des vorgenannten Antriebsraumes läßt sich auch in anderen Stellungen des Ventils als in seiner Offenstellung, in der ein notwendiger Durchtrittsspalt zwischen Verschlußteil und Schließglied zwangsläufig durch die ursächliche Bewegung des Schließgliedes und den Anschlag am Verschlußteil sichergestellt ist, der eingangs erwähnte Spalt, der Pfützen- bzw. Dombildung verhindert, erzeugen.

Das Verschlußteil kann entweder auf der einen oder auf der anderen Seite des Schließgliedes angeordnet werden. Falls beide Stangen in eine Richtung weisen und aus dem Ventilgehäuse herausgeführt sind, ergeben sich bei einer Anordnung des Verschlußteils auf der Seite des Schließgliedes, die von der Stangenseite abgewandt ist, insgesamt kürzere Stangen mit der Folge exakterer Schließglied- und Verschlußteilführung.

Der umgekehrte Fall eignet sich wegen der längeren Stangen besser für eine Faltenbalgausführung im Bereich der gehäuseseitigen Stangendurchführung.

Sämtliche vorgenannten Ausführungformen des Ventils gemäß der Erfindung sind ohne Einschränkung derart mit einem Ausgleichskolben auf der einen und/oder der anderen Seite des Schließgliedes zu versehen, daß Druckkräfte, die ein Öffnen des Ventils bewirken, oder Druckkräfte, die das Öffnen behindern, vollständig kompensiert werden können.

Bei den vorgeschlagenen Lösungen ergeben sich Vorteile insbesondere dadurch daß, wie dies eine Ausführungsform vorsieht, das Schließglied und der Ausgleichskolben über wenigstens ein Verbindungsstück miteinander verbunden sind, wobei in jedem Falle ein zentrischer Bereich um die Symmetrieachse des Ausgleichskolbens und des Schließgliedes von dem Verbindungsstück bzw. den - stücken frei bleibt. Durch diese Maßnahme steht der zentrische Bereich um die Symmetrieachse für die Durchführung der Stange des Verschlußteils zur Verfügung, so daß insbesondere Abdichtungsprobleme vermieden werden und die Überbrückung eines zwangsläufig erforderlichen Durchdringungsspaltes zwischen der Stange des Verschlußteils und dem Schließglied durch Anordnung eines Faltenbalges auf einfache Weise möglich ist.

Im übrigen zeigen weitere vorteilhafte Ausführungsformen des Ventils gemäß der Erfindung, die nachfolgend unter Bezug auf die entsprechenden Figuren noch im einzelnen erläutert werden, daß sowohl sämtliche Ausführungsformen des Ventils mit einem oder zwei Ausgleichskolben, aber auch jene ohne Ausgleichskolben, in allen Bereichen, in denen dynamisch beanspruchte Dichtungen angeordnet sind, jeweils mit einem Faltenbalg zur Überbrückung der kritischen Durchdringungsstellen ausrüstbar sind. Die trifft gleichermaßen für die Durchdringungsstellen zwischen Ausgleichskolben und Ventilgehäuse oder zwischen Stange und Ventilgehause zu, wie für die Durchdringungsstelle zwischen der Stangen von Verschlußteil und Schließglied oder zwischen der Stange des Verschlußteils und der Stange des Schließgliedes bzw. dem Ausgleichskolben.

Beim vorgeschlagenen Ventil können die Abdichtungsstellen erfindungsgemäß durch ventilgehäuseseitig oder schließglied-bzw. verschlußteilseitig angeordnete Dichtungsmittel realisiert werden. In jedem Falle ist dabei vorgesehen, daß zwischen den Abdichtungsstellen eine zum Innenraum des Ventilgehäuses offene, umlaufende Ausnehmung ausgebildet ist, die ventilgehäuseseitig über wenigsten einen Verbindungskanal mit der Umgebung des Ventils verbunden ist. Dadurch kann gegebenfalls die Leckage, an welcher Stelle sie auch immer an den Abdichtungsstellen auftritt, gesammelt und in die Umgebung des Ventils abgeführt werden. Im Regelfalle bildet die vorgenannte Ausnehmung in Verbindung mit dem Schließglied oder dem Verschlußteil bereits den notwendigen Leckageraum. Weitergehende Hohlräume sind in den meisten Fällen nicht erforderlich ; sie sind im Gegenteil reinigungstechnisch kritisch und daher schädlich.

Eine weitere vorteilhafte Ausführungsform des Ventils gemäß der Erfindung ermöglicht sowohl in der Schließ- als auch in der Offenstellung des Ventils eine Reinigung des Leckageraumes durch extern an das Ventil herangeführte Reinigungsflüssigkeit. Dieses wird unter anderem dadurch erreicht, daß in der Verbindungebene zwischen den Ventilgehäusen und zwischen dem Leckageraum und der Gehäusedichtung ein Kanal vorgesehen ist, in den Reinigungsflüssigkeit aus der Umgebung des Ventils über eine Anschlußöffnung heranführbar ist. Die Reinigungsflüssigkeit verteilt sich dann über den Kanal um den Leckagehohlraum herum und tritt über einen umlaufenden Ringspalt in den Leckageraum aus. Dieser Ringspalt wird zweckmäßig so ausgebildet, daß er hinsichtlich der Reinigungsflüssigkeit die Wirkung eines Düsenspaltes ausübt, wodurch der Leckageraum und die benachbarten Dichtungen gezielt gespritzt und damit wirkungsvoll gereinigt werden. Eine ander Ausführungsform sieht vor, daß die Austrittsöffnung des Kanals in Form von diskreten, geometrisch definierten Offnungen oder als eine Vielzahl geometrisch nicht definierter Öffnungen ausgebildet ist, und die darüber hinaus zweckmäßig so gerichtet sind, daß das über sie geführte Strömungsmittel eine rotative Geschwindigkeitkomponente erfährt. Durch diese Maßnahme wird der Leckageraum gezielt bespritzt und damit wirkungsvoll gereinigt. Uber einen Sammelkanal wird, nach einer weiteren Ausführungsform des Ventils gemäß der Erfindung, die Reinigungsflüssigkeit über eine Austrittsöffnung des Ventils in die Umgebung des Ventils abgeleitet. Der Sammelkanal ist zu diesem Zweck mit einem Bereich des Leckageraumes verbunden, der nicht vom Kanal berandet ist. Mit den vorgenannten Maßnahmen ist eine gleichmäßige Verteilung der Reiniungsflüssigkeit in den Leckageraum und ein Sammeln der Reinigungsflüssigkeit im Anschluß an dessen Durchspülung sichergestellt. Falls die Austrittsöffnungen des Kanals derart angeordnet sind, daß sie von den Dichtungen teilweise begrenzt werden, so erfährt wenigsten derjenige Bereich der Dichtungen, der sich zwischen den Abdichtungsstellen im Bereich des Ventilgehäuses befindet, eine Beschwallung mit Reinigungsflüssigkeit und damit eine einwandfreie Reinigung.

Ausführungsbeispiele der Erfindung sind in der Zeichnung dargestellt und werden im folgenden näher beschrieben.

Es zeigen :

Figuren 1 bis 16

in vereinfachter schematischer Darstellung prinzipielle Konfigurationen vor Schließglied, Verschlußteil und Ventilgehäuse des Ventils gemäß der Erfindung, wobei in jedem Falle die Schließ-, die Abhol- die Zwischen- und die Offenstellung dargestellt sind ;

Figuren 17 bis 20

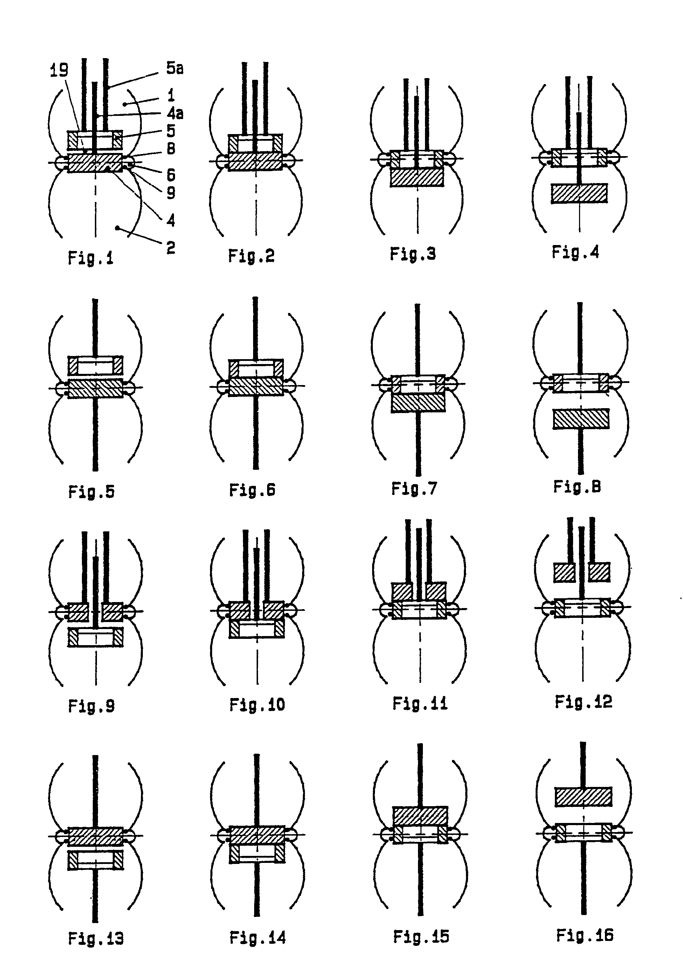

einen Mittelschnitt durch eine vorteilhafte Ausführungsform des Ventils gemäß der Erfindung, wie sie sich aus den Figuren 1 bis 4 ergibt, wobei eine einstückige Dichtung vorgesehen ist ;

Figuren 21 bis 34

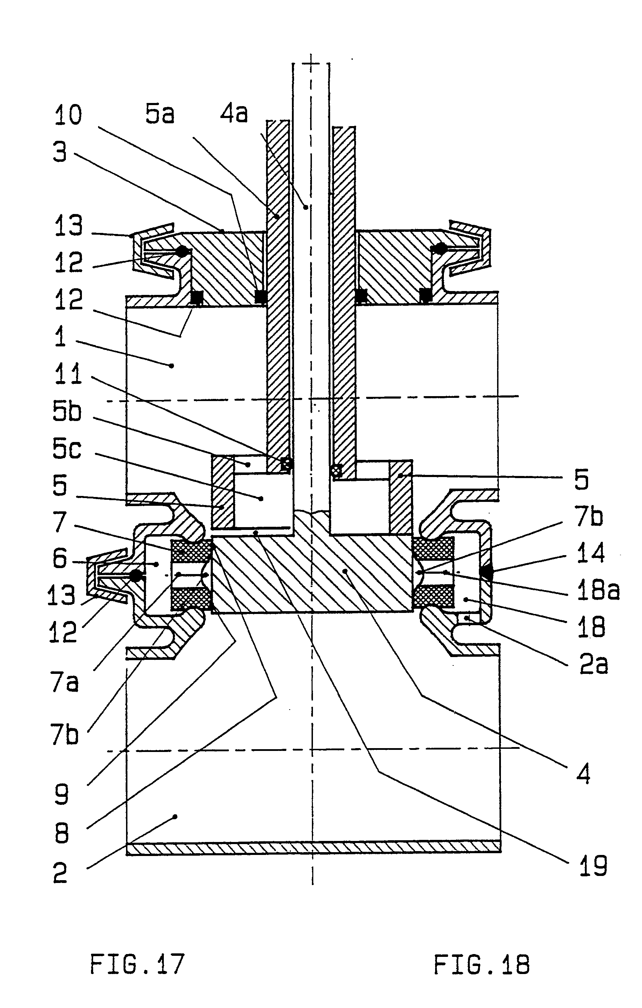

jeweils einen Mittelschnitt durch eine weitere Ausführungsform des Ventils gemäß der Erfindung, wobei in jedem Falle in der linksseitigen Darstellung in Schließstellung die prizipielle Konfiguration von Schließglied und Verschlußteil gemäß Figur 1 und in der rechtsseitigen Darstellung die jeweilige Offenstellung des Ventils gemäß Figur 4 dargestellt ist.

Im einzelnen zeigen

Figur 21, Figur 22

einen Dichtungsbereich mit gehäuseseitig angeordneten Dichtungen ;

Figur 23, Figur 24

eine einstückige Dichtung, mit der das Schließglied bzw. das Verschlußteil insgesammt armiert ist ;

Figur 25, Figur 26

ein mit zwei Ausgleichskolben ausgestattetes Schließglied, wobei die Betätigung des Verschlußteils über eine außermittig geführte Betätigungsstange erfolgt ;

Figur 27, Figur 28

eine Ausführungsform mit zwei Ausgleichskolben, wobei eine das Verschlußteil betätigende Stange zentrisch angeordnet ist ;

Figur 29, Figur 30

eine weitere Ausführungsform des Ventils gemäß der Erfindung mit zwei Ausgleichskolben, wobei jeder für sich gegenüber dem Ventilgehäuse mit einem Faltenbalg abgedichtet ist ;

Figur 31, Figur 32

eine Ausführungsform mit einem Faltenbalg zwischen den beiden Stangen und

Figur 33, Figur 34

eine weitere Ausführungsform, in der die Durchdringungsstellen der beiden Stangen jeweils über einen Faltenbalg überbrückt sind ;

Figuren 35 bis 46

In vereinfachter schematischer Darstellung prinzipielle Konfigurationen von Schließglied, Verschlußteil und Ventilgehäuse ensprechend den Konfigurationen gemäß Figuren 1 bis 16 in der Schließ-, der Zwischen- und der Offenstellung des Ventils, wobei lediglich die Stange des Schließgliedes aus dem Ventilgehäuse herausgeführt und eine Feder zwischen Verschlußteil und Ventilgehäuse vorgesehen ist ;

Figur 47

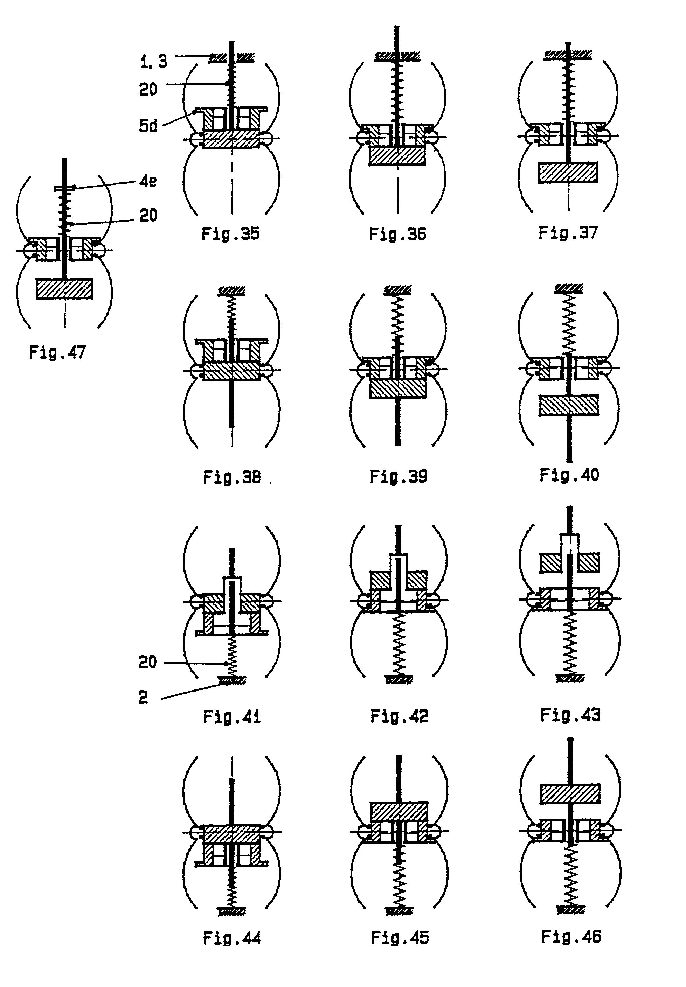

eine andere Anordnung gemäß den Figuren 35 bis 37, wobei eine Feder zwischen dem Verschlußteil und der Stange des Schließgliedes vorgesehen ist ;

Figur 48, Figur 49

einen Mittelschnitt durch eine detaillierter dargestellte Ausführungsform gemäß Figur 35 bzw. Figur 47;

Figur 50

eine Ausführungsform gemaß Figur 35, wobei am Schließglied zwei Ausgleichskolben vorgeseher sind;

Figur 51, Figur 52

eine Ausführungsfarm gemäß den Figuren 41 bis 43, wobei die linksseitige Darstellung das Ventil in seiner Schließ- und die rechtseitige Darstellung es in seiner Offenstellung zeigt und wobei die Stange des Verschlußteils innerhalb des Schließgliedes mit einem Antriebskolben ausgestattet ist ;

Figur 53, Figur 54

einen Mittelschnitt durch eine andere Ausführungsform des Ventils gemäß der Erfindung, wie sie sich aus den Figuren 9 bis 12 ergibt ;

Figur 55, Figur 56

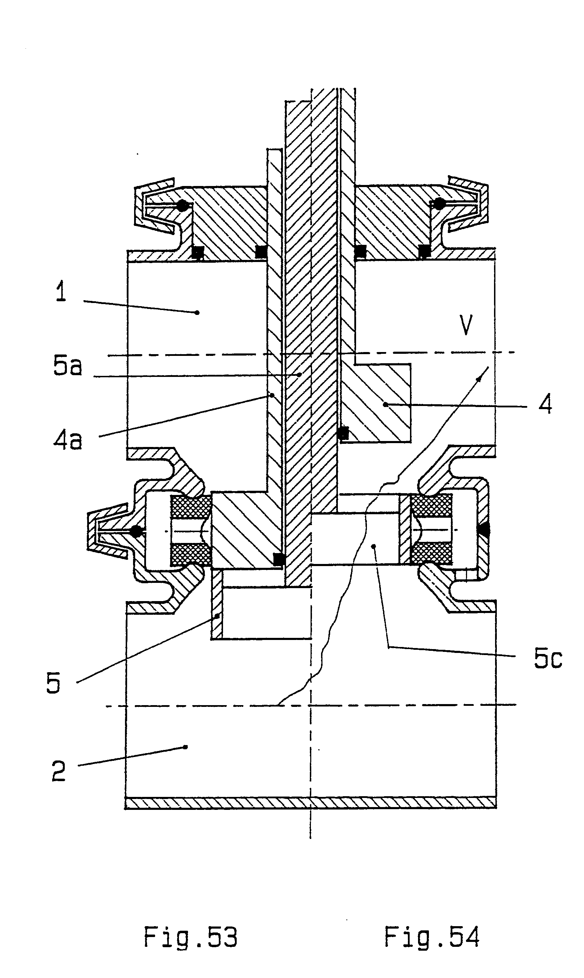

eine Ausführungsform gemäß Figur 53 und 54, mit einem Ausgleichskolben beiderseits des Schließgliedes ;

Figur 57, Figur 58

eine weitere Ausführungsform gemäß Figur 53 und 54 mit Faltenbalglösung für beide Stangen ;

Figur 59, Figur 60

einen Mittelschnitt durch die Ausführungsform gemäß Figuren 1 bis 4, wobei Figur 59 die Sitzreinigungsstellung für die untenliegende und Figur 60 jene für die obenliegende Abdichtungsstelle in der Schließstellung des Ventils zeigen ;

Figur 61, Figur 62

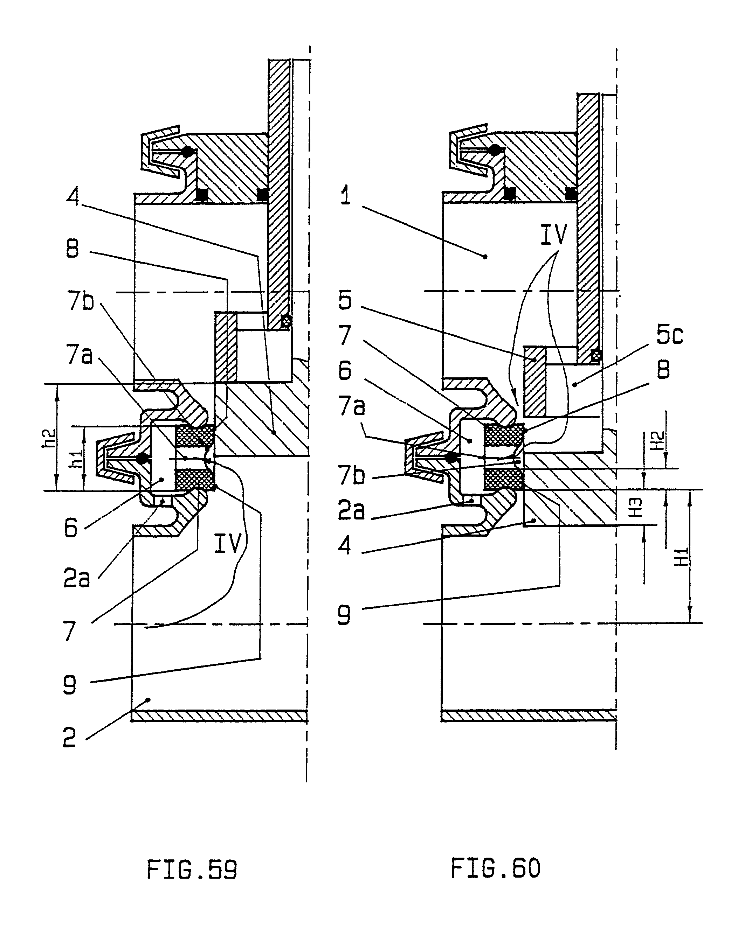

einen Mittelschnitt durch das Ventil gemäß den Figuren 59 und 60, wobei die beiden Sitzreinigungsstellungen in der Offenstellung des Ventils dargestellt sind ;

Figur 63, Figur 64

einen Mittelschnitt durch eine Ausführungsform des Ventils gemäß der Erfindung in der Schließ- bzw. in der Offenstellung, wobei das Verschlußteil - beide Anordnungen bzgl. des Schließgliedes sind in Figur 9 alternativ dargestellt - mit dem Schließglied im Abstand fest verbunden ist ;

Figur 65, Figur 66

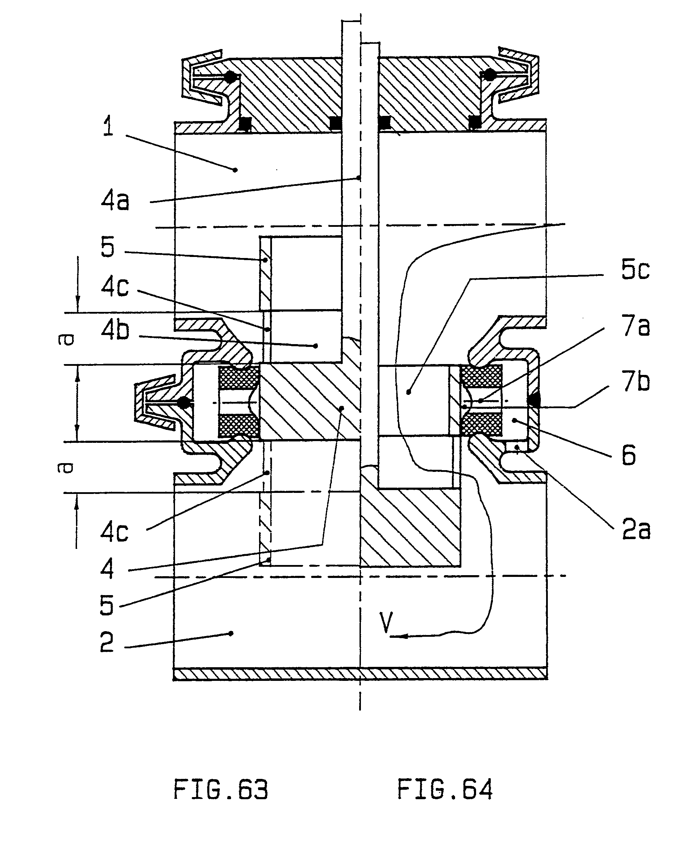

einen Mittelschnitt durch eine abgewandelte Ausführungsform gemäß den Figuren 63 und 64 mit einem Steuersteg zwischen Schließglied und Verschlußteil ;

Figur 67

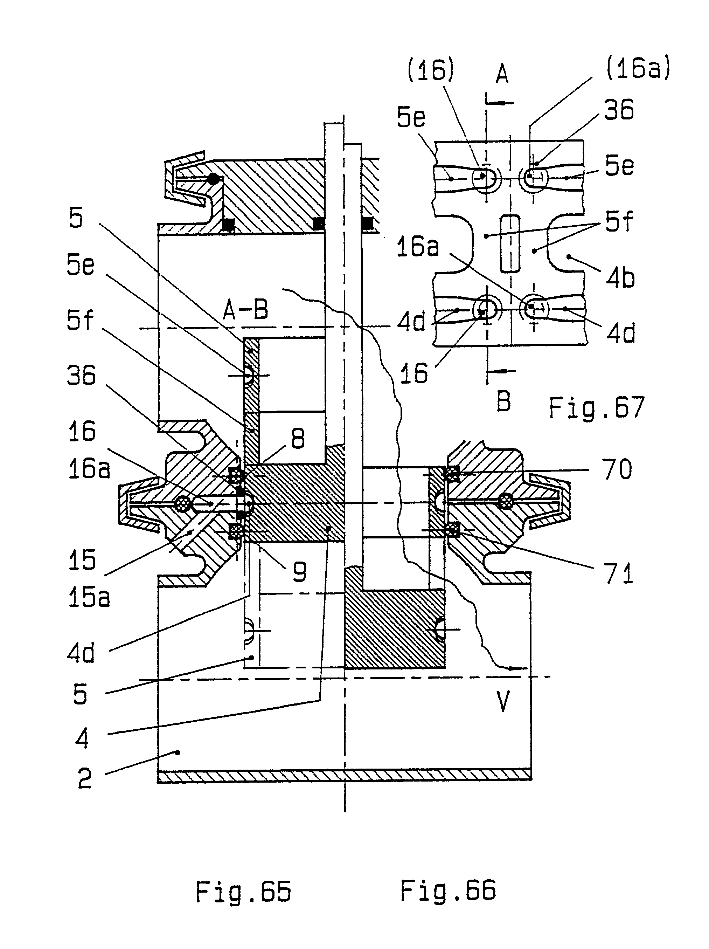

eine ausschnittsweise Darstellung der Ansicht des Schließgliedes und des Verschlußteiles zur Kennzeichnung des den Figuren 65 und 66 zugrunde liegenden Schnittverlaufs ;

Figur 68, Figur 69

einen Mittelschnitt durch das Ventil gemäß der Erfindung im Bereich des Leckageraumes und der angrenzenden Ventilgehäuseverbindung, wie sie in den Figuren 1 bis 64 offenbart ist ;

Figur 70, Figur 71

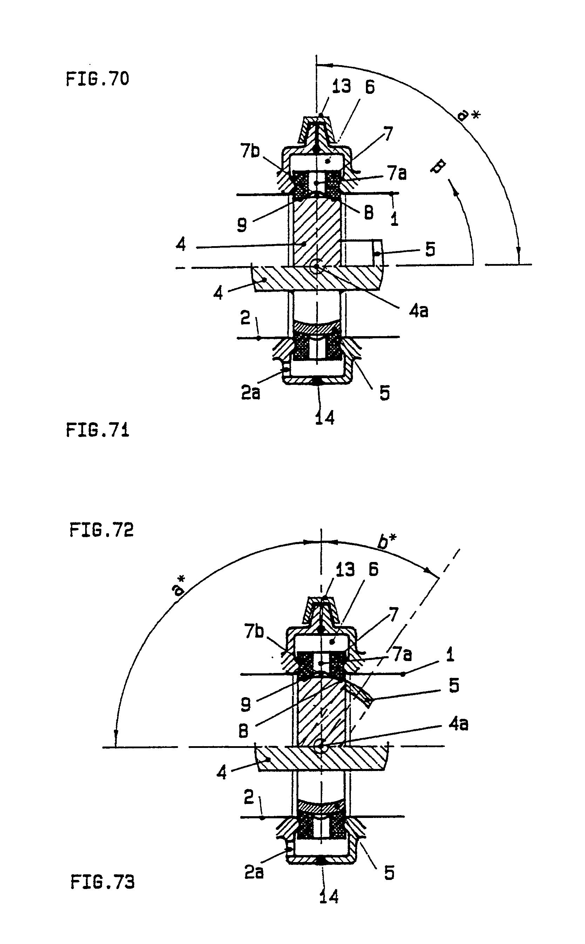

einen Mittelschnitt durch eine andere Ausführungsform des Ventils gemäß der Erfindung, wobei sowohl das Schließglied als auch das Verschlußteil als Drehschieber ausgebildet und fest miteinander verbunden sind (Schließstellung : Figur 70 ; Offenstellung : Figur 71) ;

Figur 72, Figur 73

einen Mittelschnitt durch eine weitere Ausführungsform des Ventils gemäß der Erfindung, wobei Schließglied und Verschlußteil als Drehschieber ausgebildet und relativ beweglich zueinander angeordnet sind (Schließstellung : Figur 72 ; Offenstellung : Figur 73).

In der nachfolgend angegebenen Liste sind die in der folgenden Beschreibung der Figuren 1 bis 73 verwendeten Bezeichnungen aufgeführt.

EP 0 279 177 B1

## LISTE DER BEZEICHNUNGEN

| | |
|---|---|
| 1,2 | Ventilgehäuseteile |
| 2a | Ablauföffnung |
| 2b | Ausnehmung im Gehäuse |
| 3 | Gehäuseverschlußteil |
| 4 | Schließglied |
| 4a | Stange (Drehachse, Fig. 70 bis 72) |
| 4b | Öffnungen |
| 4c | Verbindungsstege |
| 4d | Ausnehmung im Schließglied |
| 4e | Federwiderlager |
| 4f | Schließgliedbegrenzungsfläche |
| 4g | Antriebsraum |
| 5 | Verschlußteil |
| 5a | Stange |
| 5b | Stege |
| 5c | Durchtrittsöffnung |
| 5d | Anschlag |
| 5e | Ausnehmung im Verschlußteil |
| 5f | Steuersteg |
| 5g | Antriebskolben |
| 5h | Kolbendichtung |
| 6 | Leckageraum |
| 7 | Dichtung |
| 70 | erste Dichtung |
| 71 | zweite Dichtung |
| 7a | Verbindungskanäle |
| 7b | Ausnehmung in Dichtung |
| 8 | erste Abdichtungsstelle |
| 9 | zweite Abdichtungsstelle |
| 10 | innere Stangendichtung |
| 11 | äußere Stangendichtung |
| 12 | Gehäusedichtung |
| 13 | Verbindungsmittel |
| 14 | stoffschlüssige Verbindung |
| 15 | Anschlußöffnung |
| 15a | zweite Anschlußöffnung |

9

| | | | |
|---|---|---|---|
| 16 | Kanal | 27 | zweiter Faltenbalg |
| 16a | zweiter Kanal | 28 | dritter Faltenbalg |
| 17 | Austrittsöffnung | 29 | erste Durchdringungsstelle |
| 18 | Sammelkanal | 30 | zweite Druchdringungsstelle |
| 18a | vorgeschalteter Sammelkanal | 31 | dritte Durchdringungsstelle |
| 20 | Feder | 32 | vierte Durchdringungsstelle |
| 21 | erster Ausgleichskolben | 33 | fünfte Durchdringungsstelle |
| 22 | zweiter Ausgleichskolben | 34 | vierter Faltenbalg |
| 23 | Verbindungsstück | 35 | fünfter Faltenbalg |
| 24 | Verbindungstraverse | | |
| 25 | Betätigungsstange | | |
| 26 | erster Faltenbalg | | |

| | |
|---|---|
| I | Eintritt der Reinigungsflüssigkeit |
| II | Austritt der Reinigungsflüssigkeit/Leckage |
| III | Reinigungsflüssigkeitsstrahl |
| IV | Sitzreinigungsströmung |
| V | Durchtritts- oder Rohrströmung |
| .a | Abstand |
| a* | erster Drehweg |
| b* | zweiter Drehweg |
| ß | Richtung der Öffnungsbewegung |
| h1 ) | |
| h2 ) | |
| H1 ) | Schalthübe |
| H2 ) | |
| H3 ) | |

Die Figuren 1 bis 4, 5 bis 8, 9 bis 12 und 13 bis 16 zeigen die vier prinzipiell möglichen Konfigurationen von Schließglied 4 und Verschlußteil 5 innerhalb der Ventilgehäuseteile 1, 2. Ein leckageraum 6 befindet sich gehäuseseitig zwischen den Ventilgehäuseteilen 1 und 2. Die beiden Abdichtungsstellen 8 und 9 sind in der Darstellung weder dem Gehäuse 1 bzw. 2 noch dem Schließglied 4 zugeordnet. Bei den Konfigurationen gemäß den Figuren 1 bis 4 und 9 bis 12 weisen die Stangen 4a, 5a in eine Richtung, bei den Konfigurationen gemäß Fig. 5 bis 8 und 13 bis 16 sind letztere in entgegengesetzten Richtungen aus dem Ventilgehäuse 1 bzw. 2 herausgeführt. Die Figuren 1, 5, 9 und 13 zeigen jeweils die Schließstellung des Ventils, in der das Verschlußteil 5 mit dem Schließglied 4 einen Spalt 19 bildet, die Figuren 4, 8, 12 und 16 zeigen jeweils seine Offenstellung. Die Figuren 2, 6, 10 und 14 zeigen das Ventil jeweils in einer sog. "Abholstellung", in der das Schließglied 4 den Spalt 19 überbrückt hat, und die Figuren 3, 7, 11 und 15 zeigen das Ventil jeweils in einer Zwischenstellung, in der das Verschlußteil 5 die Verbindung zwischen dem Leckageraum 6 und dem Innenraum der Ventilgehäuseteile 1, 2 vollständig verschlossen hat und das Schließglied 4 sich von dem Verschlußteil 5 gerade trennt.

In den Figuren 17, 18, 19 und 20 ist die Konfiguration gemäß Fig. 1 bis 4 in der Schließ-, in der Abhol-, in der Zwischen- und in der Offenstellung im einzelnen näher dargestellt. Die Ventilgehäuseteile 1, 2 sind beispielsweise über geeignete Verbindungsmittel 13 (Fig. 17) unter Zwischenschaltung einer Gehäusedichtung 12 miteinander verbunden. Im Bereich ihrer Verbindungsteile sind die Ventilgehäuseteile 1, 2 derart

10

EP 0 279 177 B1

ausgebildet, daß sie in Verbindung mit einer Dichtung 7 einen Leckageraum 6 begrenzen, der als umlaufender Ringraum um die Dichtung 7 herum angeordnet ist.

Auf der dem Ventilinnenraum zugewandten Seite der Dithtung 7 befinden sich eine erste und eine zweite Abdichtungsstelle 8 bzw. 9, zwischen denen eine zum Innenraum des Ventilgehäuses 1, 2 offene, umlaufende Ausnehmung der Dichtung 7b vorgesehen ist. Letztere verfügt zweckmäßigerweise über mehrere auf dem Umfang der Dichtung 7 verteilte Verbindungskanäle 7a, die die Ausnehmung in der Dithtung 7b mit dem Letkageraum 6 verbinden. Ein als Schieber ausgebildetes Schließglied 4 befindet sich in der Schließstellung des Ventils (Fig. 17) innerhalb der Dichtung 7 und bildet mit dieser die erste und zweite Abdichtungsstelle 8 bzw. 9. Oberhalb des Schließgliedes 4 ist ein als zylinderförmiger ringförmiger Körper ausgebildetes Verschlüßteil 5 angeordnet, welches über Stege 5b mit einer Stange 5a verbunden ist und mit dem Schließglied 4 einen umlaufenden Spalt 19 bildet. Die Stange 5a ist über eine Stangendichtung 11 gegen eine zur Betätigung des Schließgliedes 4 vorgesehene Stange 4a abgedichtet und gleichzeitig zweckmäßigerweise auf dieser geführt. Beide Stangen 4a, 5a sind in einer Richtung aus dem Ventilgehäuseteil 1 durch einen Gehäuseverschlußteil 3 herausgeführt. Die Abdichtung der Stange 5a im Gehäuseverschlußteil 3 besorgt eine innere Stangendichtung 10 ; Gehäuseverschlußteil 3 und Ventilgehäuseteil 1 sind mittels einer Gehäusedichtung 12 gegeneinander abgedichtet. Das Verschlußteil 5 weist gegenüber den Abdichtungsstellen 8, 9 die diesbezügliche Form und die Abmessungen des Schließgliedes 4 auf und eine Durchtrittsöffnung 5c zwischen den Stegen 5b besitzt zweckmäßig einen dem Nennquerschnitt des Ventils entsprechenden Quersthnitt. In der dargestellten Schließstellung des Ventils wird das Überströmen von Fluiden von dem Ventilgehäuseteil 1 in das Ventilgehäuseteil 2 oder umgekehrt durch die beiden Abdichtungsstellen 8 und 9 verhindert. Falls an den Abdichtungsstellen 8, 9 eine Leckage auftritt, so gelangt diese in die Ausnehmung der Dichtung 7b und wird von dort über die vorgeschalteten Sammelkanäle 18a und den Sammelkanal 18 in den Leckageraum 6 abgeführt.

Von hier kann sie über eine Ablaufoffnung 2a (Fig. 18) in die Umgebung des Ventils austreten.

In der sog. "Abholstellung" (Fig. 18) hat das Verschlußteil 5 den Spalt 19 überbrückt und ist am Schließglied 4 zur Anlage gelangt. Aus dieser Stellung heraus bewegen sich Schließglied 4 und Verschlußteil 5 gemeinsam in die nachfolgend beschriebene Zwischenstellung. Alternativ zur Verbindung der Ventilgehäuseteile 1, 2 mittels Verbindungsmittel 13 ist in Figur 18 eine stoffschlüssige Verbindung 14 (Verschweißung) dargestellt.

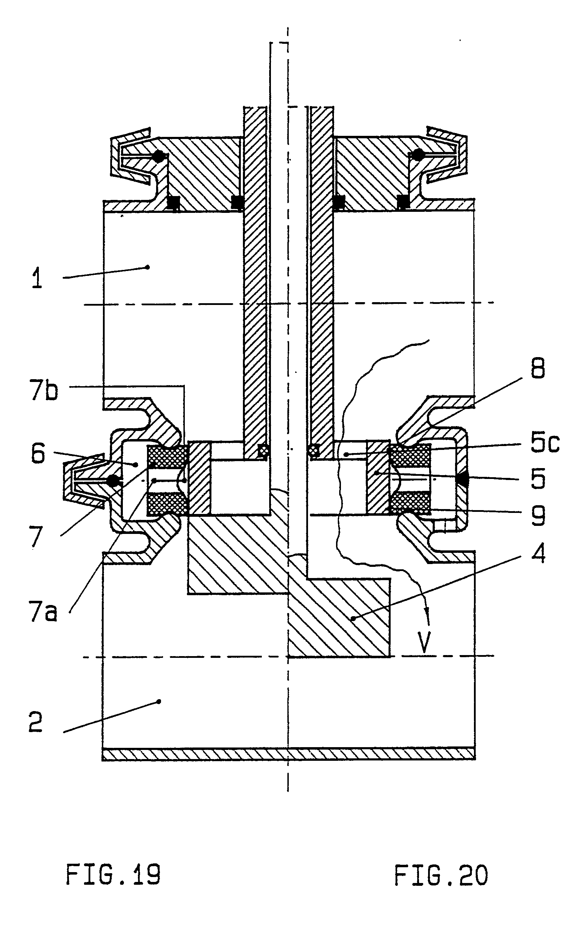

Fig. 19 zeigt die vorstehend bereits erläuterte Zwischenstellung des Ventils. Das Verschlußteil 5 hat auf dem Weg in die gezeigte Zwischenstellung die durch das Schließglied 4 in seiner Schließstellung und Abholstellung eingenommene Lage innerhalb des Dichtringes 7 vollständig übernommen. Da das Verschlußteil 5 und das Schließglied 4 auf dem Weg in die gezeigte Stellung einander stets dichtend berühren, kann kein im Ventilgehäuseteil 1 anstehendes Fluid in die Ausnehmung der Dichtung 7b und damit über die Verbindungskanäle 7a in den Leckageraum 6 gelangen. Der Schaltvorgang erfolgt bis in diese Stellung leckagefrei.

Auf dem Weg des Schließgliedes 4 in seine volle Offenstellung (Fig. 20) ergibt sich auch keine Schaltleckage. Das Verschlußteil 5 verharrt in seiner Lage innerhalb der Dichtung 7 und verschließt über die Abdichtungsstellen 8, 9 somit dauerhaft die Verbindung zwischen dem Leckageraum 6 und dem Innenraum der Ventilgehäuseteile 1, 2. In der vollen Offenstellung des Ventils ist der Abstand zwischen dem Schließglied 4 und dem Verschlußteil 5 so bemessen, daß der nutzbare Durchtrittsquerschnitt für die Durchtrittsoder Rohrströmung V zweckmäßigerweise dem Nennquerschnitt des Ventils entspricht. Die Schließbewegung des Ventils vollzieht sich sinngemäß in umgekehrter Reihenfolge ; sie weist, ebenso wie die Öffnungsbewegung, keine Schaltleckage auf.

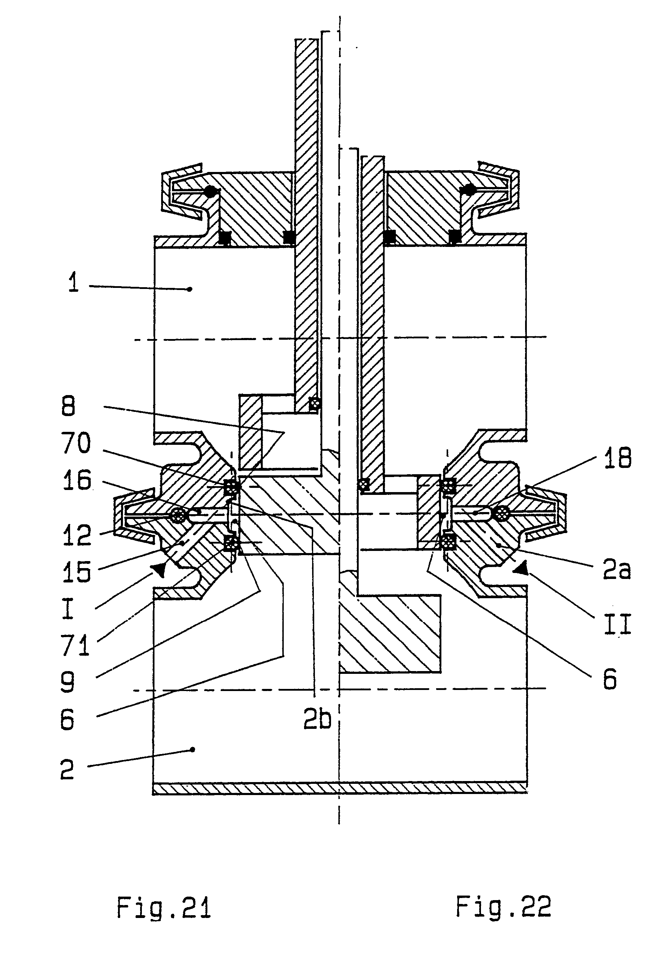

Figur 21 zeigt eine Ausführungsform des erfindungsgemäßen Ventils, bei dem die Abdichtungsstellen 8, 9 durch zwei separate Dichtungen 70, 71 realisiert werden. Zwisthen den Abdichtungsstellen 8, 9 ist eine zum Innenraum des Ventilgehäuses 1, 2 offene, umlaufende Ausnehmung 2b vorgesehen, die ventilgehäuseseitig über wenigstens einen Kanal 16 mit einer Anschlußöffnung 15 verbunden ist, welche eine Verbindung zur Umgebung des Ventils herstellt. Die Ausnehmung in der Dichtung 2b bildet in Verbindung mit dem Schließglied 4 den Leckageraum 6 ; der Kanal 16 wird beiderseits von den Ventilgehäuseteilen 1, 2 begrenzt und außenseits über die Gehäusedichtung 12 gegen die Umgebung des Ventils abgedichtet. Figur 21 zeigt die Schließstellung des Ventils. Über die Anschlußöffnung 15a erfolgt der Eintritt der Reinigungsflüssigkeit I in das Ventil. Die Reinigungsflüssigkeit durchströmt den Leckageraum 6 und gelangt, wie in Figur 22, die die Offenstellung des Ventils zeigt, dargestellt, über den Sammelkanal 18 und die Ablauföffnung 2a als Austritt der Reinigungsflüssigkeit II in die Umgebung des Ventils. Für den Fall einer Leckage im Sitzbereich wird diese über den Sammelkanal 18 und Ablauföffnung 2a als Austritt der Leckage II in die Umgebung des Ventils abgeleitet.

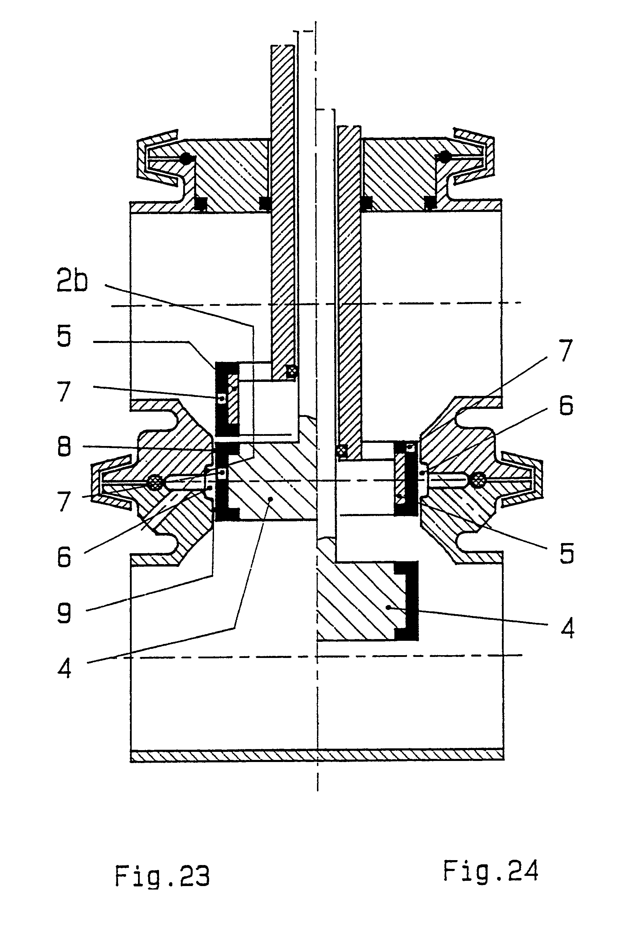

In Figur 23 ist die Dichtung 7 schließglied- bzw. verschlußteilseitig angeordnet und armiert als einstückige Dichtung den gesamten die Abdichtungsstellen 8 bzw. 9 tangierenden Mantelbereich des Schließgliedes 4 bzw. des Verschlußteiles 5. Zwecks Bildung des Letkageraumes 6 ist zwischen den Abdichtungsstellen 8, 9 eine Ausnehmung im Gehäuse 2b vorgesehen. Figur 23 zeigt das Ventil in seiner Schließtellung, wobei die Dichtung 7 in Verbindung mit der Abdichtung 8, 9 und der Ausnehmung im Gehäuse 2b den Leckageraum 6 begrenzt.

In Figur 24, in der die Offenstellung des vorgenannten Ventils gezeigt ist, bildet nunmehr das Verschlußteil 5 in Verbindung mit seiner Dichtung 7 und der vorstehend erwähnten Ausnehmung im Gehäuse 2b den Lackageraum 6. Sowohl in der Schließ- als auch in der Offenstellung des beschriebenen Ventils kann eine Leckage über die Abdichtungsstellen 8,9 in den Leckageraum 6 überführt und von dort in die Umgebung des Ventils abgeführt werden.

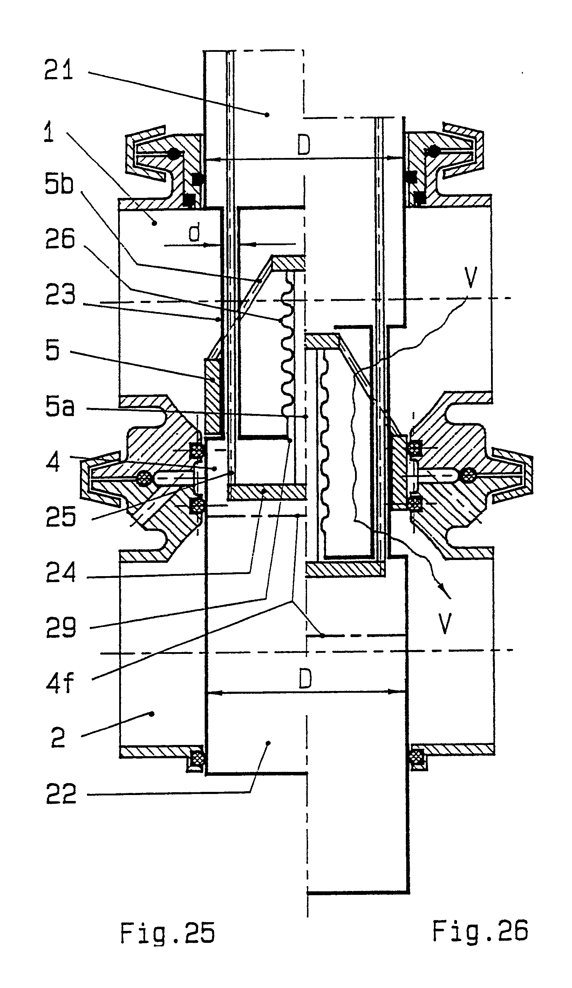

Figur 25 zeigt ein Ventil gemäß den Figuren 1 bis 4 in seiner Schließstellung, wobei auf der der Richtung der Öffnungsbewegung abgewandten Seite des Schließgliedes 4 an dem Schließglied 4 ein zylinderförmiger erster Ausgleichskolben 21 angeordnet ist, dessen Durchmesser D dem Durchmesser D des Schließgliedes 4 möglichst gleich ist. Schließglied 4 und Ausgleichskolben 21 sind über ein Verbindungsstück 23 miteinander verbunden, dessen Durchmesser d kleiner ist als der Durchmesser D des Schließgliedes 4 bzw. des Ausgleichskolbens 21. Das Verbindungsstück 23 ist außerhalb des zentrischen Bereichs um die Symmetrieachse des Schließgliedes 4 angeordnet, so daß die Stange 5a des Verschlußteils 5 in der Symmetrieachse des Schließgliedes Aufnahme finden kann. Die Stange 5a ist mittelbar über eine Verbindungstraverse 24 und eine Betätigungsstange 25 auf dem Weg durch das Schließglied 4 und das Verbindungsstück 23 durch den ersten Ausgleichskolben 21 aus dem Ventilghäuseteil 1 herausgeführt. Die Stange 5a trägt an ihrem oberen Ende über die schräg nach unten verlaufenden Stege 5b das Verschlußteil 5. Durch die vorgeschlagene Ausbildung der Stange 5a, der Stege 5b und des Verschlußteils 5 ist eine stoffschlüssige Überbrückung der zwischen der Stange 5a und dem Schließglied 4 gebildeten ersten Durchdringungsstelle 29 mittels eines ersten Faltenbalges 26 in vorteilhafter Weise möglich. Zum Ausgleich der das Schließglied 4 öffnenden Druckstöße genügt die Anordnung des ersten Ausgleichskolbens 21.

Druckstöße im Ventilgehäuseteil 2 führen nicht zu einer Verschiebung des Schließgliedes 4 nach oben, da sich letzteres bereits in seiner oberen Endlage befindet, die durch einen nicht näher dargestellten Anschlag in Antriebsbereich sicher begrenzt wird. Falls das Schließglied 4 über eine Schließgliedbegrenzungfläche 4f hinaus mit einem zweiten Ausgleichskolbne 22 verseher wird, der sich nach Möglichkeit durchmessergleich am Schließglied 4 unmittelbar anschließt und durch das Ventilgehäuseteil 2 herausgeführt ist, läßt sich das Schließglied 4 problemlos im Ventilgehäuseteil 2 gegen inkompressible Medien öffnen bzw. Druckstöße in diesem Bereich, die daß Öffnen behindern, werden kraftwirkungsfrei kompensiert. Figur 26 zeigt das vorstehend beschriebene Ventil in seiner Offenstellung. Die Durchtritts- oder Rohrströmung V gelangt vom Ventilgehäuseteil 1 in das Ventilgehäuseteil 2 und umströmt dabei den ersten Faltenbalg 26 in seiner gestreckten und damit reinigungsfreundlichen Ausbildung.

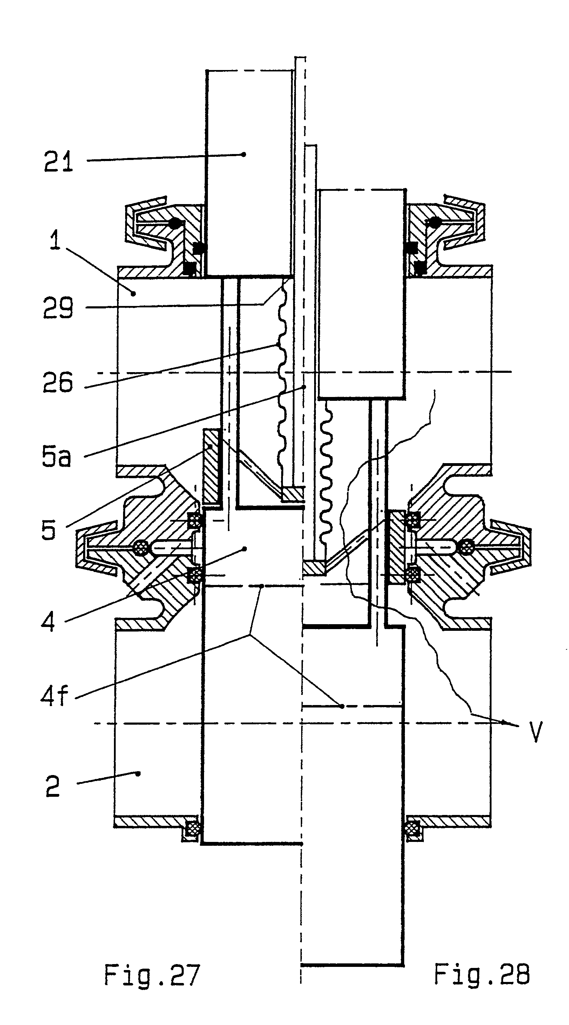

Die Ausführungsform des Ventils gemäß Figur 27 unterscheidet sich von jener gemäß Figur 25 lediglich dadurch, daß die Stange 5a des Verschlußteils 5 unmittelbar durch den ersten Ausgleichskolben 21 aus dem Ventilgehäusteil 1 herausgeführt ist. Die erste Durchdringungsstelle 29 zwischen der Stange 5a und dem Ausgleichskolben 21 wird über den ersten Faltenbalg 26 stoffschlüssig überbrückt, der, wie in der Offenstellung des Ventils gemäß Figur 28 ersichtlich, seine kürzeste Ausbildung erreicht. Der übrige Aufbau des vorgenannten Ventils ist mit jenem gemäß Figur 25 identisch ; eine diesbezügliche Beschreibung erübrigt sich daher.

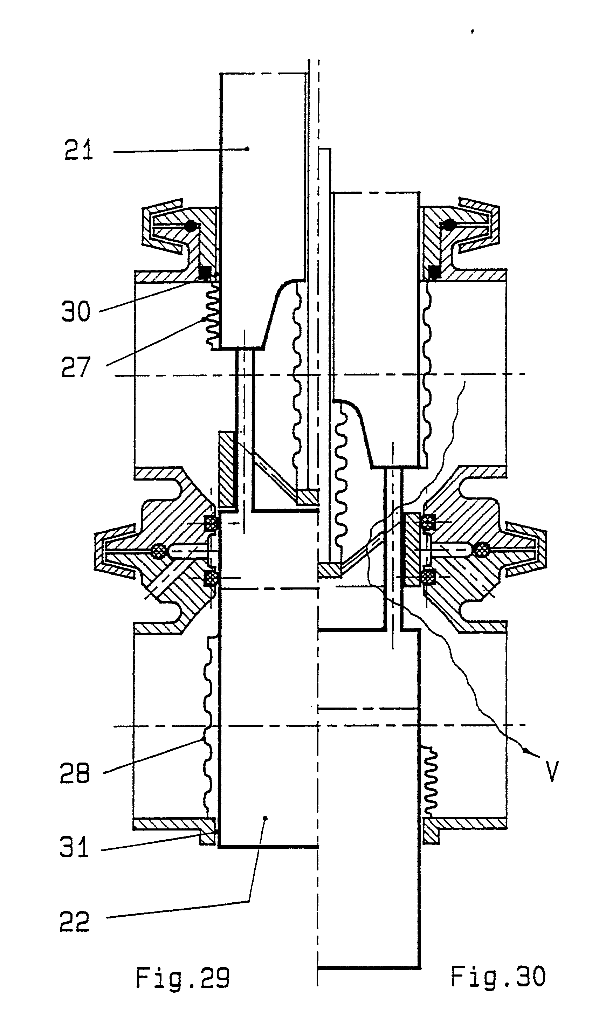

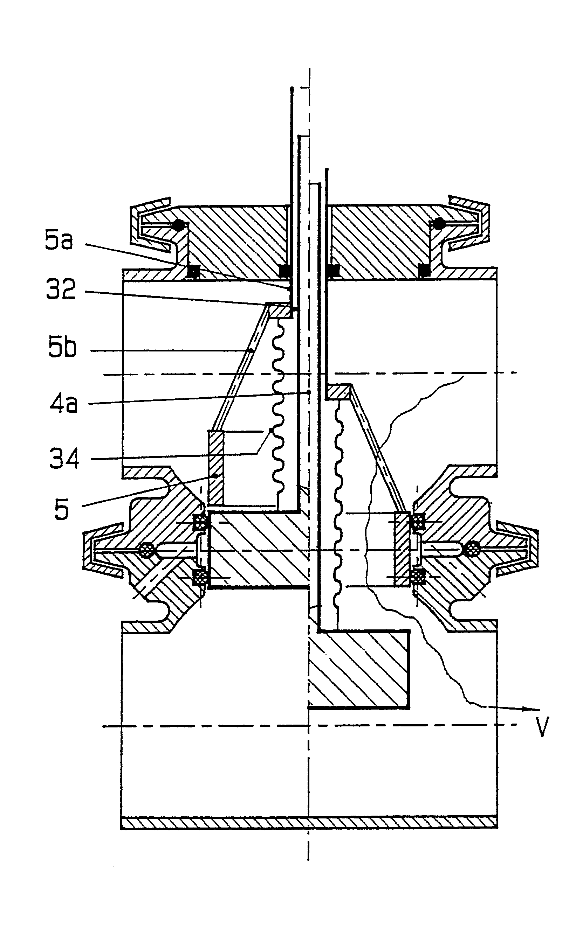

Die in den Figuren 29 (Schließstellung des Ventils) und Figur 30 (Offenstellung des Ventils) dargestellte Ausführungsform eines Ventils ist in ihrem prinzipiellen Aufbau jener gemäß Figur 27 identisch. Der Unterschied besteht darin, daß eine zweite und eine dritte Durchdringungsstelle 30 bzw. 31 zwischen dem ersten Ausgleichskolben 21 bzw. dem zweiten Ausgleichskolben 22 jeweils durch einen zweiten Faltenbalg 27 bzw. dritten Faltenbalg 28 stottschlüssig überbrückt wird. Durch eine nicht näher bezeichnete Vertiefung im ersten Ausgleichskolben 21 zur Verlagerung des Anschlußpunktes des die Stange des Verschlußteils umschließenden Faltenbalges kann dessen Streckungsverhältnis in günstiger Weise beeinflußt werden. Figur 31 zeigt eine Ausführungsform des Ventils gemäß den Figuren 1 bis 4 in der speziellen Ausbildung gemäß Figur 21 bzw. 17. Die bei den letztgenannten Ausführungsformen als kritisch zu betrachtende äußere Stangendichtung 11 wird bei der Ausführungsform gemäß Figur 31 durch eine vierte Durchdringungsstelle 32 zwischen der Stange 4a und der Stange 5a mittels eines vierten Faltenbalges 34 stoffschlüssig überbrückt. Dabei ist der Anlenkungspunkt des Faltenbalges 34 an der Stange 5a durch besondere Formgebung der Stege 5b des Verschlußteils 5 so weit wie möglich nach oben hin verlegt, damit der Faltenbalg 34 mit einem günstigen Steckungsverhältnis arbeiten kann. In Figur 32 ist die vorstehend beschriebene Anordnung in ihrer Offenstellung dargestellt. Man erkennt, daß die Durchtrittsoder Rohrströmung V auf einen Faltenbalb 34 mit größtmöglicher Längung trifft, wodurch günstige Reinigungsbedingungen in diesem Bereich geschaffen werden.

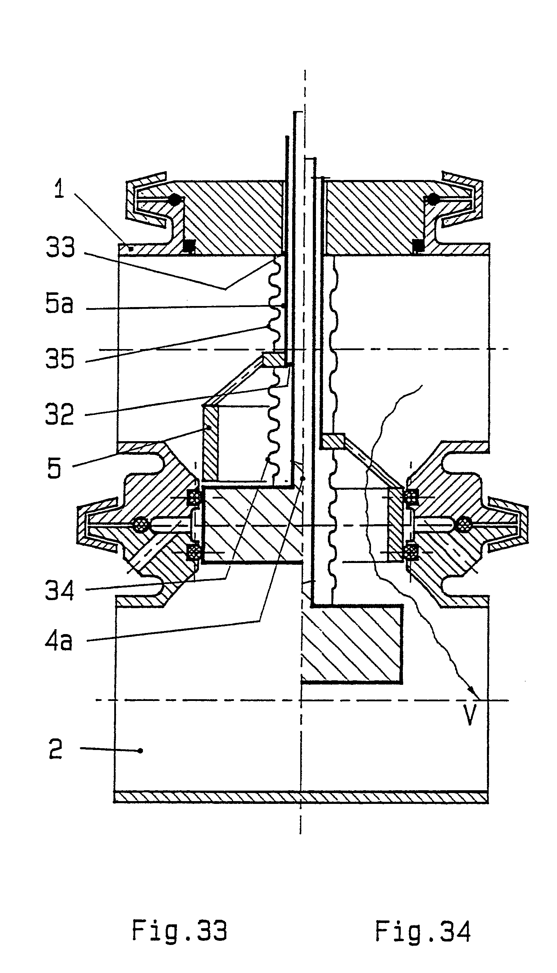

In den Figuren 33 und 34 ist die Ausführungsform eines Ventils dargestellt, welches in seinem prizipiellen Aufbau identisch mit jenem gemäß Figur 31 ist. Es unterscheidet sich von letzterem dadurch, daß eine fünfte Durchdringungsstelle 33 zwischen der gehäuseseitigen Stange 5a und dem Ventilgehäuseteil 1 durch einen fünften Faltenbalg 35 stoffschlüssig überbrückt wird. Das dargestellte Ventil weist somit in den Durchdringungsbereichen der Stangen 4a, 5a keine dynamisch beanspruchten Dichtungen mehr auf. Es eignet sich daher vor allem für Anwendungen im Sterilbereich. Aus der in Figur 34 dargestellten Offenstellung des Ventils ersieht man, daß beide Faltenbälge 34 und 35 in dieser Stellung ihre maximale Längung ausbilden. Sie sind zweckmäßigerweise so bemessen, daß sie ihre spannungsfreie Längung in einer Zwischenstellung zwischen der in Figur 33 dargestellten Schließstellung und der in Figur 34 gezeigten Offenstellung erreichen.

In den Figuren 35 bis 46 finden sich die vier prinzipiell möglichen Konfigurationen von Schließglied 4 und Verschlußteil 5 innerhalb der Ventilgehäuseteile 1, 2, wie sie bereits vorstehend in den Figuren 1 bis 16 dargestellt wurden. Der Unterschied zu den erstgenannten Ausführungsformen der Ventile besteht darin, daß nur die Stange 4a des Schließgliedes 4 aus dem Ventilgehäuse 1 bzw. 2 herausgeführt ist und daß das Verschlußteil 5 im oder am Schließglied 4 geführt ist, daß eine Feder 20 zwischen Schließglied 4 und Verschlußteil 5 (vergl. Fig. 47) oder zwischen dem Ventilgehäuse 1, 3 bzw. 2 und dem Verschlußteil 5 vorgesehen ist, wodurch eine Mitnahme vom Verschlußteil 5 durch das Schließglied 4 bzw. eine Bewegung des Verschlußteils 5 mit der letzgenannten Wirkung erfolgt, und daß ein Anschlag 5d am Verschlußteil 5 vorgesehen ist, der dessen Mitnahme über den Sitzbereich des Ventils hinaus begrenzt. Die Feder 20 kann sich entweder am Ventilgehäuseteil 1 bzw. 3 (Fig. 35) oder am Ventilgehäuseteil 2 (Fig. 41) unmittelbar abstützten. Die gleiche Wirkung der Feder 20 auf das Verschlußteil 5 wird im wesentlichen gleichermaßen auch nach einer Ausführungsform gemäß Figur 47 erreicht, bei der sich die Feder 20 gegen ein Federwiderlager 4e an der Stange 5a abstützt. Man erkennt weiterhin, daß der Spalt 19 zwischen Schließglied 4 und Verschlußteil 5 in der Schließstellung des Ventils, wie es bei den Ausführungsformen gemäß den Figuren 1, 5, 9 und 13 gegeben ist, bei den Ausführungsformen gemäß den Figuren 35 bis 47 nicht realisierbar ist. Die Feder 20 drückt in der Abhol- und in der Zwischenstellung das Verschlußteil 5 stets gegen das Schließglied 4. Diese Tatsache ergibt einerseits einen sehr einfachen Antrieb, andererseits sind, falls der vorgenannte Spalt 19 bei den Ausführungsformen gemäß den Figuren 35 bis 47 notwendig ist, zusätzliche Maßnahmen, die nachfolgend noch beschrieben werden, erforderlich.

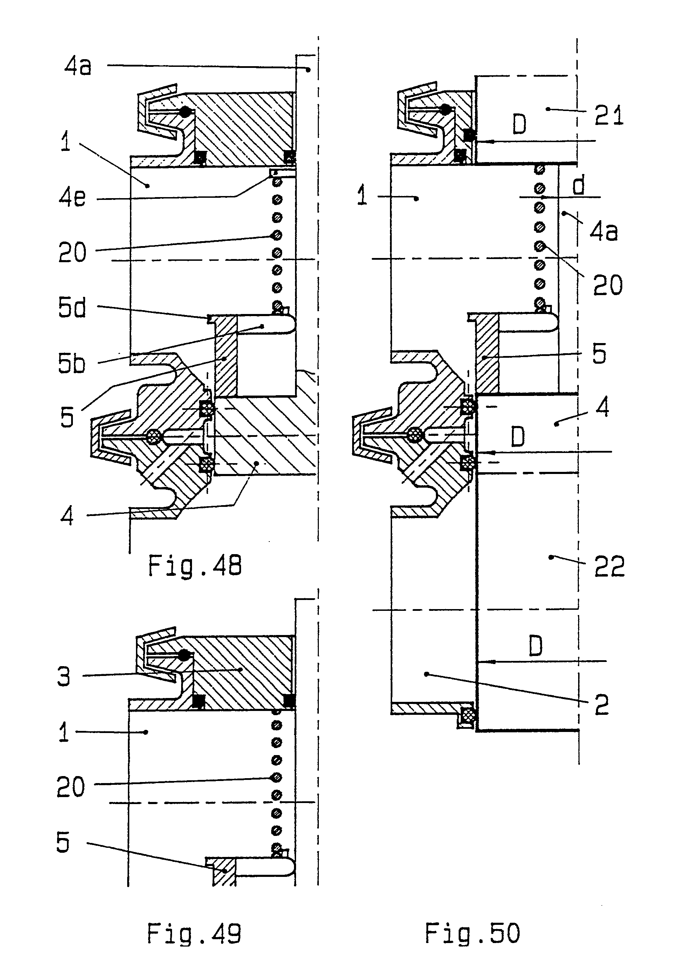

In Figur 48 ist eine Ausführungsform des Ventils gemäß Figur 47 im relevanten Bereich des Ventilgehäuseteils 1 detaillierter ausgebildet. Man erkennt, daß das Verschlußteil 5 über die Stege 5b auf der Stange 4a des Schließgliedes 4 geführt ist. Die Feder 20 stützt sich einerseits über die Stege 5b am Verschlußteil 5 und andererseits über das Federwiderlager 4e an der Stange 4a ab. Am Verschlußteil 5 ist der Anschlag 5d vorgesehen, der die Mitnahme des Verschlußteils 5 über seinen Sitzbereich hinaus begrenzt.

Figur 49 zeigt in einem Teilbereich des Ventilgehäuseteils 1 eine weitere Ausführungsform des Ventils gemäß Figur 35. Hierbei stützt sich die Feder 20 einerseits, wie bei der Ausführungsform gemäß Figur 48, am Verschlußteil 5 und andererseits unmittelbar am Gehäuseverschlußteil 3 ab.

In Figur 50 ist eine Ausführungsform des Ventils dargestellt, bei dem die Ausführungsform des Ventils gemäß Figur 48 durch die Anordnung des ersten Ausgleichskolbens 21 und des zweiten Ausgleichskolbens 22 modifiziert wurde. Die Stange 4a des Schließgliedes 4 bildet gleichermaßen das Verbindungsstück zwischen Schließglied 4 und erstem Ausgleichskolben 21 und die Führungsstange für das Verschlußteil 5. Sie besitzt einen Durchmesser d, der kleiner ist als der Durchmesser D des Schließgliedes 4 bzw. des Ausgleichskolbens 21. Das Federwiderlager für die Feder 20 ergibt sich aus der stirnseitigen Begrenzung des ersten Ausgleichskolbens 21. Der zweite Ausgleichskolben 22 schließt sich durchmessergleich am Schließglied 4 an und ist aus dem Ventilgehäuseteil 2 herausgeführt.

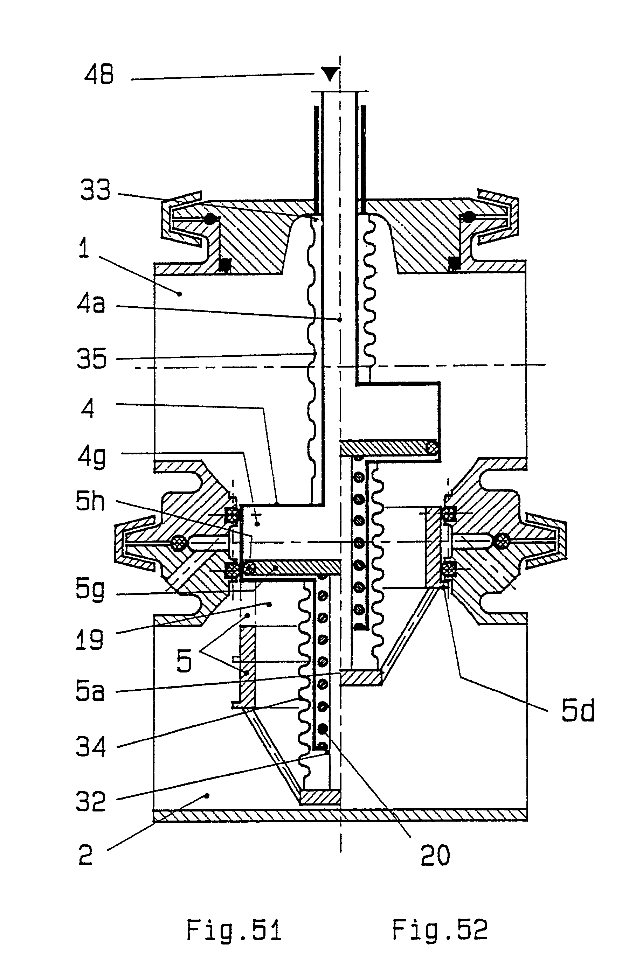

Die Ausfuhrurgsform des Ventils gemäß Figur 51 entspricht jener der Figuren 41 bis 43. Das Verschlußteil 5 ist unterhalb des Schließgliedes 4 angeordnet, wobei die Stange 4a nach oben über die fünfte Durchdringungsstelle 33 aus dem Ventilgehäuseteil 1 herausgeführt ist, während die Stange 5a das Schließglied 4 zentrisch von unten her durchdringt und in ihm geführt ist. Die Stange 5a ist an ihrem oberen Ende mit einem Antriebskolben 5g verbunden, der innerhalb des Schließgliedes 4 mittels einer Kolbendichtung 5h dichtend geführt ist und mit dem hohl ausgeführten Schließglied 4 einen Antriebsraum 4g begrenzt, der über die Stange 4a mit einem Druckmittelanschluß 48 in Verbindung steht. Die Feder 20 stützt sich einerseits auf dem Antriebskolben 5g ab und andererseits an einer nicht näher bezeichneten, in das Ventilgehäuseteil 2 hineinreichenden Verlängerung des Schließgliedes 4, die gleichzeitig auch als Führung für die Stange 5a innerhalb des Schließgliedes 4 dient. Bei der dargestellten Ausführungsform werden sowohl die vierte Durchdringungsstelle 32 als auch die fünfte Durchdringungsstelle 33 mittels des vierten Faltenbalgs 34 bzw. des fünften Faltenbalgs 35 stoffschlüssig überbrückt. Zur Sicherstellung eines Spaltes 19 zwischen Schließglied 4 und Verschlußteil 5 in der Schließstellung des Ventils wird der Antriebsraum 4g über den Druckmittelanschluß 48 mit Druckmittel beaufschlagt, so daß das Verschlußteil 5, welches zunächst unter der Einwirkung der Feder 20 am Schließglied 4 angepreßt bleibt, unter Bildung des in der Figur dargestellten Spaltes 19 vom Schließglied 4 weg verschoben wird. In der in Figur 52 dargestellten Offenstellung des Ventils kann die Ansteuerung des Antriebsraumes 4g mit Druckmittel unterbleiben, da der Durchtrittspalt zwischen Schließglied 4 und Verschlußteil 5 durch die über die Stange 4a angreifende Öffnungskraft bei gleichzeitiger Hubbegrenzung des Verschlußteiles 5 durch dessen Anschlag 5d ursächlich bewirkt wird.

In Fig. 53 ist die Konfiguration gemäß den Figur 9 bis 12 im einzelnen näher ausgestaltet. Das Verschlußteil 5 befindet sich nun jedoch unterhalb des Schließgliedes 4, und die zu seiner Betätigung notwendige Stange 5a ist durch die als Hotlstange ausgebildete Stange 4a des Schließgliedes 4 hindurchgeführt. In seinem weiteren Aufbau entspricht das dargestellte Ventil jenem gemäß Figur 17 ; eine nähere Beschreibung erübrigt sich daher. Während Figur 53 die Schließstellung des Ventils zeigt, offenbart Figur 54 dessen volle Offenstellung. Die Durchtrittsströmung V gelangt dabei aus dem Ventilgehäuseteil 2 über die Durchtrittsöffnung 5c innerhalb des Verschlußteiles 5 in das Ventilgehäuseteil 1. Die Ausführungsform gemäß Fig. 53 ergibt gegenüber jener gemäß Figur 17 kürzere Stangen 4a, 5a ; dies hat eine exaktere Führung des Schließgliedes 4 und des Verschlußteiles 5 zur Folge.

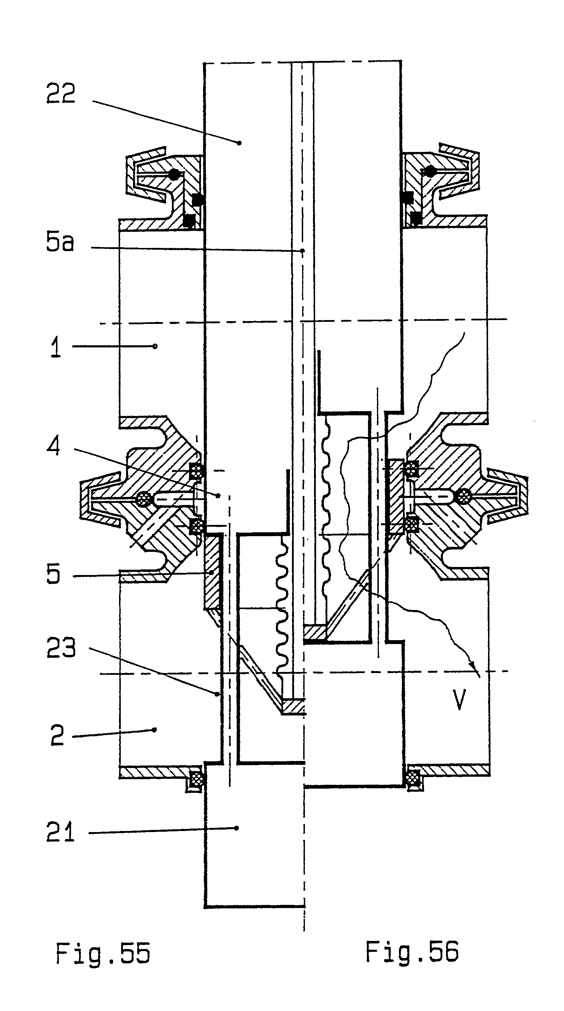

In den Figuren 55 und 56 ist eine Ausführungsform des Ventils gemäß den Figuren 9 bis 12 beiderseits des Schließgliedes 4 mit dem ersten Ausgleichskolben 21, der über das Verbindungsstück 23 mit dem Schließglied verbunden ist und dem zweiten Ausgleichskolben 22, der sich unmittelbar und durchmessergleich am Schließglied 4 anschließt, ausgestattet. Die Stange 5a des Verschlußteils 5 ist zentrisch durch das Schließglied 4 hindurchgeführt, wobei seine, mit dem Schließglied gebildetete, nicht näher bezeichnete Durchdringungsstelle mit einem ebenfalls nicht näher bezeichneten Faltenbalg stoffschlüssig überbrückt wird. Aus der in Figur 56 dargestellten Offenstellung des Ventils erkennt man, daß der Faltenbalg in dieser Lage seine größte Längung besitzt und sich somit reinigungsfreundlich der Durchtritts- oder Rohrströmung V darbietet.

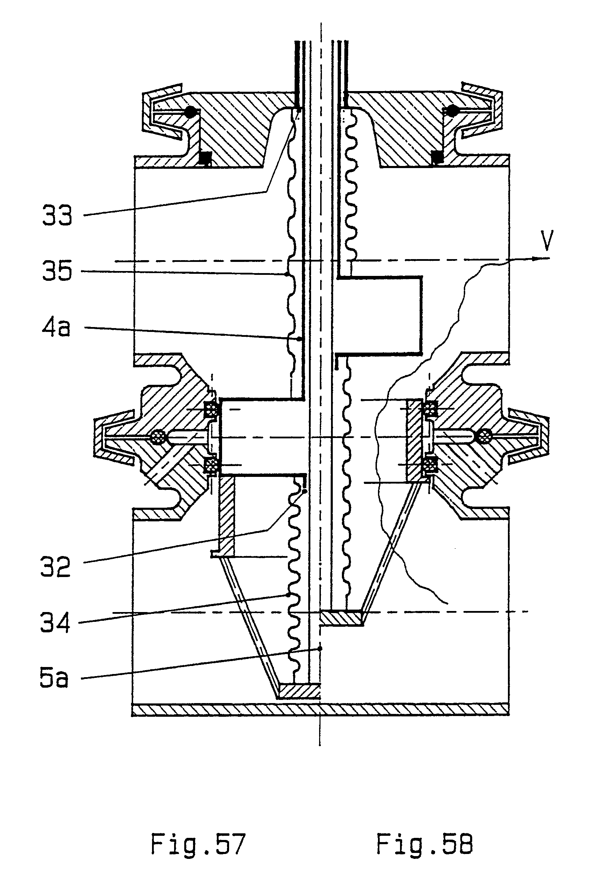

In den Abb. 57 und 58 ist die Ausführungsform eines Ventils gemäß den Figuren 9 bis 12 dargestellt. Die Schließgliedkonfiguration und die Anordnung der Stange 5a zur Betätigung des Verschlußteils 5 ist mit jener gemäß Figur 55 identisch ist. Neben der stoffschlussigen Überbrückung der vierten Durchdringungsstelle 32 mittels des vierten Faltenbalges 34 ist auch die zwischen der Stange 4a des Schließgliedes 4 und dem Gehäuse gebildete fünfte Durchdringungsstelle 33 mit dem fünften Faltenbalg 35 stoffschlüssig überbrückt. Diese Ausführungsform verfügt, ebenso jene gemäß Figur 51, somit beiderseits des Schließgliedes 4 über je einen Faltenbalg 34 bzw. 35, wobei der fünfte Faltenbalg 35 in der Schließstellung und der vierte Faltenbalg in der Offenstellung (vergl. Figur 58) des Ventils jeweils ihre maximale Längung besitzen. Die Faltenbälge 34 und 35 werden zweckmäßig so dimensioniert, daß sie ihre spannungsfreie Ausgangslänge in einer Stellung zwischen der Scthließ- und Offenstellung des Ventils erreichen. Durch entsprechende Ausgestaltung, des nicht näher dargestellten Antriebes des Ventils, kann ebenso, wie bei der Ausführungsform gemäß Fig. 55, der zur Verhinderung eines Doms unterhalb des Schließgliedes 4 notwendige und nicht näher bezeichnete Spalt sichergestellt werden. Die gezeigte Ausführungsform des Ventils weist besondere Eignung für den Einsatz in Sterilbereichen auf.

In Figur 59 ist die Ausführungsform des Ventils gemäß Fig. 17 in seiner sogenannten Sitzreinigungsstellung gezeigt. Das Schließglied 4 ist dabei in einer Schließstellung des Ventils derart positioniert, daß nur die Abdichtungsstelle 8 realisiert und über die durch den Teilhub des Schließgliedes 4 freigelegte Abdichtungsstelle 9 der Leckageraum 6 mit dem der freigelegten Abdichtungsstelle 9 benachbarten Ventilgehäuseteil 2 verbunden ist. Eine Sitzreinigungsströmung IV gelangt aus dem Ventilgehäuseteil 2 über den Spalt zwischen dem Schließglied 4 und der Dichtung 7 in die Ausnehmung der Dichtung 7b und von dort über die Verbindungskanäle 7a in den Leckageraum 6, um dann über die Sammelkanäle 18, 18a und die Ablauföffnung 2a in die Umgebung des Ventils auszutreten (vergl. Fig. 18).

Die Ablauföffnung 2a ist in Fig. 59 nicht lagerichtig dargestellt. Weiterhin sind in Figur 59 die Hübe h1 und h2 angegeben. Ersterer stellt den Hub des Verschlußteils 5 von der Offen- in die Schließstellung des Ventils dar. Letzterer gibt den Gesamthub des Verschlußteiles 5 aus der Offenstellung in die dargestellte Sitzreinigungsstellung an.

Fig. 60 zeigt die Sitzreinigungsstellung für die Abdichtungsstelle 8. In dieser Stellung gelangt die Sitzreinigungsströmung IV aus dem Ventilgehäuseteil 1 sowohl über die Durchtrittsöffnung 5c innerhalb des Verschlußteiles 5 als auch aus dem Bereich außerhalb des Verschlußteiles 5 in die Ausnehmung der Dichtung 7b und von dort auf dem vorstehend beschriebenen Weg in die Umgebung des Ventils. Die Angabe der Hübe HI, H2 und H3 soll aufzeigen, welche Verstellmöglichkeiten antriebsseitig hinsichtlich des Schließgliedes 4 vorzusehen sind. Der Hub HI stellt die axiale Bewegung des Schließgliedes 4 aus seiner Schließ-in seine volle Offenstellung dar. Der Hub H2 gibt seine Verschiebung in die Sitzreinigungsstellung für die Abdichtungsstelle 9, der Hub H3 jene in die Sitzreinigungstelle für die Abdichtungsstelle 8 an. Der nicht näher bezeichnete Spalt zwischen dem Verschlußteil 5 und der Dichtung 7 stellt sicher, daß auch die Reinigungsflüssigkeit außerhalb des Verschlußteiles 5 im Wege der Sitzreinigung ausgetauscht werden kann.

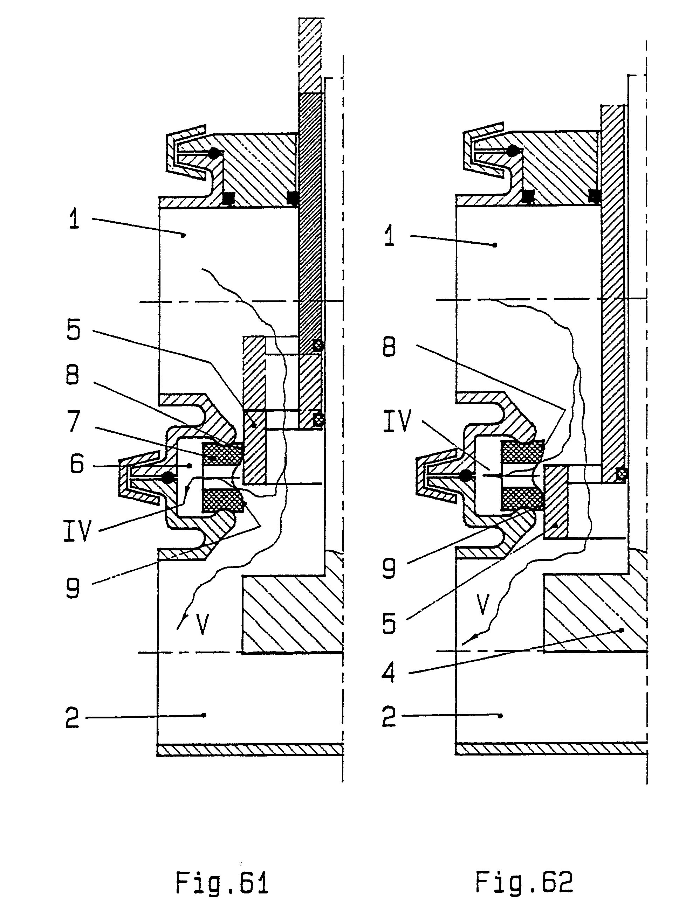

Das Ventil gemäß der Erfindung erlaubt auch die vorstehend beschriebene Sitzreinigung durch Verschieben des Verschlußteiles 5 aus seiner Schließlage heraus in die eine oder andere Richtung. In Figur 61 ist die Reinigung der Abdichtungsstelle 9 gezeigt, in der das Verschlußteil 5 um einen Teilhub in Richtung des Ventilgehäuseteils 1 verschoben ist, wodurch zwar die Abdichtungsstellen 9, nicht aber die Abdichtungsstelle 8 freiliegt. In dieser Stellung kann die Durchtritts- oder Rohrströmung V vom Ventilgehäuseteil 1 in das Ventilgehäuseteil 2 oder umgekehrt gelangen. Ein Teilstrom, die sog. Sitzreinigungsströmung IV, gelangt über den Spalt zwischen Verschlußteil 5 und Dichtung 7 in den Leckageraum 6, um auf diesem Weg sämtlichhe freigelegten Dichtungsflächen und den Leckageraum zu reinigen. In Figur 62 ist die Reinigung der Abdichtungsstelle 8 gezeigt, wobei das Verschlußteil 5 um einen Teilhub in Richtung des Ventilgehäuseteils 2 verschoben ist.

Die Erläuterungen zu Figur 61 gelten sinngemäß auch für Figur 62, wobei allerdings für die Durchtritts- oder Rohrströmung V zwischen Verschlußteil 5 und Schließglied 4 nicht mehr der volle, dem Nennquerschnitt des Ventils entsprechende Querschnitt zur Verfügung steht.

Die Ausführungsform des Ventils gemäß den Figuren 63 und 64 unterscheidet sich von jener gemäß den Figuren 17 bzw. 53 dadurch, daß das Verschlußteil 5 mit dem Schließglied 4 in einem Abstand a fest verbunden ist, und daß der zwischen dem Schließglied 4 und dem Verschlußteil 5 nutzbare Querschnitt der Öffnungen 4b zweckmäßigerweise dem Nennquerschnitt des Ventils entspricht.

In Fig. 63 sind die beiden alternativ möglichen Anordnungen des Verschlußteils 5 dargestellt. Mehrere über den Umfang des Verschlußteils 5 verteilte Stege 4c realisieren die vorstehend angegebene feste Verbindung. Bei der dargestellten Ausführungsform ist nur noch die Stange 4a des Schließgliedes 4 aus dem Ventilgehäuseteil 1 herausgeführt. Während Fig. 63 die Schließstellung des Ventils zeigt, ergibt sich seine Offenstellung aus Fig. 64.

Die Durchtritts- oder Rohrströmung V gelangt aus dem Ventilgehäuseteil 1 über die Durchtrittsöffnung 5c und den zwischen Verschlußteil 5 und Schließglied 4 zwischen den Stegen 4c nutzbaren Öffnungen 4b in das Ventilgehäuseteil 2. Der Schaltvorgang zwischen Schließ- und Offenstellung des Ventils bzw. in umgekehrter Reihenfolge ist nicht leckagefrei, da eine Zwischenstellung existiert, in der eine Verbindung zwischen der Ausnehmung der Dichtung 7b und dem Innenraum des Ventilgehäuses über die Öffnungen 4b besteht. Der übrige Aufbau des dargestellten Ventils unterscheidet sich nicht von den bereits vorstehend beschriebenen Ausführungsformen. Eine Beschreibung im einzelnen erübrigt sich daher.

Die Ausführungsform gemäß Figur 65 entspricht hinsichtlich seiner grundsätzlichen Ausbildung des Schließgliedes 4 und des Verschlußteils 5 der Ausführungsform gemäß Figur 63. Im Unterschied zur Ausführungsform gemäß Figur 63 ist eine Ausnehmung im Schließglied 4d und eine ebensolche Ausnehmung im Verschlußteil 5e vorgesehen. Aus einer Teilansicht des Schließgliedes 4 und des Verschlußteils 5 gemäß Figur 67 ist ersichtlich, daß die vorgenannten Ausnehmungen 4d bzw. 5e in gleicher Weise an ihrem Umfang unterbrochen sind. Der in Figur 65 dargestellte Schnitt durch das Schließglied 4 und das Verschlußteil 5 ergibt sich aus dem in Figur 67 gekennzeichneten Schnittverlauf A-B. Zwischen den Abdichtungsstellen 8,9 mündet ein Kanal 16 und einer zweiter Kanal 16a, die jeweils über eine Anschlußöffnung 15 bzw. 15a mit der Umgebung des Ventils verbunden sind, nebeneinander, jedoch voneinander getrennt, in den Innenraum der Ventilgehäuseteile 1,2 aus. Schließglied 4 bzw. Verschlußteil 5 korrespondieren derart mit dem Kanal 16 und dem zweiten Kanal 16a, daß das eine Ende der Ausnehmung 4d nur mit dem Kanal 16 und das andere nur mit dem zweiten Kanal 16a in unmittelbarer Verbindung steht. Das gleiche gilt hinsichtlich der Ausnehmung 5e in der Schließlage des Verschlußteils 5. In Richtung des Schaltweges des Schließgliedes 4 ist zwischen den einander entsprechenden Enden der Ausnehmung 4d bzw. 5e ein mit der Mantelfläche des Schließgliedes 4 und des Verschlußteils 5 höhengleicher Steuersteg 5f vorgesehen, der während des Schaltweges die Ausmündung des Kanals 16 und jene des zweiten Kanals 16a über jeweils eine Dichtung 36, die am stirnseitigen Ende des Kanals 16 bzw. 16a angeordnet ist, dichtend verschließt. In der Schließstellung des Ventils (Figur 65) kann eine gegebenenfalls auftretende Leckage an den Abdichtungsstellen 8 oder 9 in den durch die Ausnehmung im Schließglied 4d gebildeten Leckageraum 6 gesammelt und beispielsweise über den zweiten Kanal 16a und die zweite Anschlußöffnung 15a in die Umgebung des Ventils abgeführt werden.

Eine Reinigung des Leckageraumes und der angrenzenden Dichtungen 70, 71 ist in dieser Stellung ebenfalls möglich, indem beispielsweise die Reinigungsflüssigkeit über die Anschlußöffnung 15 und den Kanal 16 zugeführt und über den zweiten Kanal 16a und die zweite Anschlußöffnung 15a abgeführt wird. Die Abstände der Dichtungen 70 und 71 und die Abmessungen des Schließgliedes 4, des Verschlußteiles 5 und der Ausnehmung 4d bzw. 5e sind so aufeinander abgestimmt, daß bei der Öffnungsbewegung des Ventils zunächst über den Steuersteg 5f die Kanäle 16, 16a verschlossen werden, bevor die Dichtung 71 vom Schließglied 4 verlassen wird. Auf dem Weg in die Offenstellung verbleiben die vorgenannten Kanäle 16 und 16a über den Steuersteg 5f so lange geschlossen, bis die Dichtungen 70 und 71 beiderseits der Ausnehmung 5e am Verschlußteil 5 zur Anlage gelangt sind. Auch in der Offenstellung des Ventils, die in Figur 66 dargestellt ist, verfügt der über die Ausnehmung 5e gebildete Leckageraum über einen Zulauf aus bzw. einen Ablauf in die Umgebung des Ventils. Das Verschlußteil 5 kann, ebenso wie bei der Ausführungsform gemäß Figur 63, auch im Bereich des Ventilgehäuseteils 2 am Schließglied 4 angeordnet sein. Die entsprechende Anordnung ist in Figur 65 strichpunktiert dargestellt. Das vorstehend beschriebene Ventil entspricht in seinem übrigen Aufbau jenem gemäß Figur 63 ; eine detailliertere Beschreibung erübrigt sich daher. Mit dem Ventil ist ein leckagebegrenztes Schalten möglich, allerdings unter Verzicht auf den höchstmöglichen Sicherheitsstandard. Die Sicherheitseinschränkung ist dadurch gegeben, daß während der Schaltbewegung Reinigungsflüssigkeit unter Druck an einem der Kanäle 16 bzw. 16a anstehen kann.

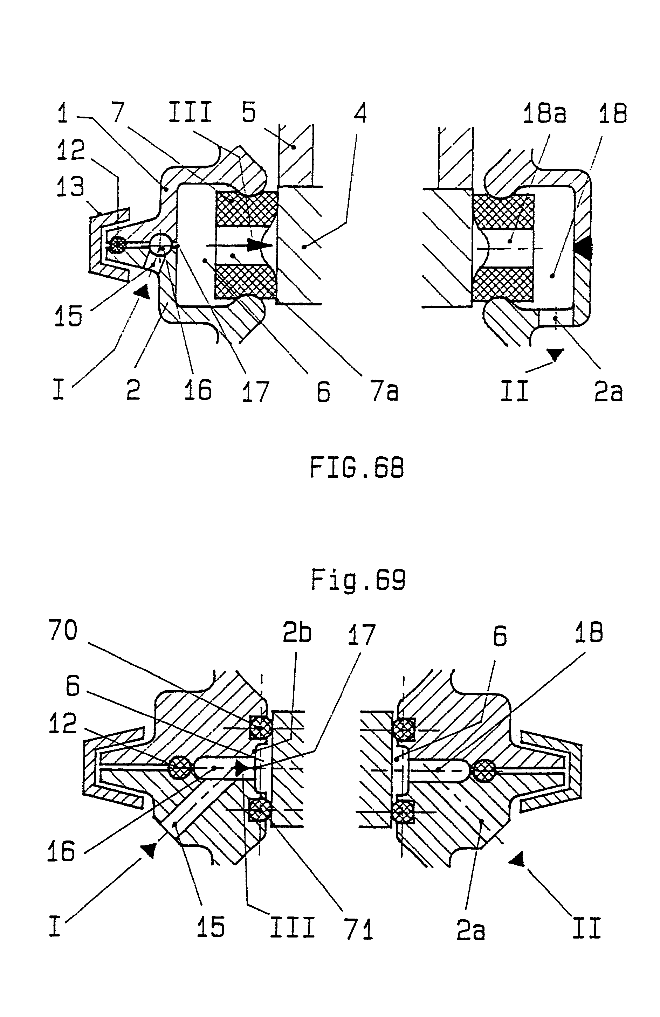

Figur 68 zeigt eine vorteilhafte Ausführungsform des Ventils gemäß der Erfindung im Bereich des Leckageraumes 6 und der angrenzenden Ventilgehäuseverbindung 1, 2. In der Verbindungsebene zwischen den Ventilgehäuseteilen 1 und 2 und zwischen dem Leckageraum 6 und der Gehäusedichtung 12 ist der Kanal 16 vorgesehen, der von den Ventilgehäuseteilen 1,2 beiderseits begrenzt wird. Er ist in einem der Ventilgehäuseteile 1 bzw. 2 mit wenigstens einer Anschlußöffnung 15 mit der Umgebung des Ventils verbunden. Zum Leckageraum 6 hin besitzt der Kanal 16 eine umlaufende Verbindung in Form eines Ringspaltes 17, der als Düse derart ausgebildet ist, daß die über die Anschlußöffnung 15 in ihn eingeleitete Reinigungsflüssigkeit in den Leckageraum 6 austreten kann. Der Ringspalt 17 ist zweckmäßigerweise so gerichtet, daß der umlaufende Reinigungsflüssigkeitsstrahl III die Dichtung 7 und insbesondere die in dieser angeordneten Verbindungskanäle 7a gezielt bespritzt. Durch diese Ausführungsform ist das Ventil sowohl in seiner Schließ- als auch in seiner Offenstellung im Bereich seines Leckageraumes 6 jederzeit reinigbar.

Der Kanal 16 erstreckt sich nahezu über den gesamten Umfang des Leckageraumes 6, wogegen ein vorgeschalteter Sammelkanal 18a und ein Sammelkanal 18 mit einem Bereich des Leckageraumes 6 verbunden ist, der nicht vom Kanal 16 berandet ist. Durch die vorgeschlagene Ausbildung des Kanals 16 und des Sammelkanals 18 wird bezweckt und erreicht, daß die Reinigungsflüssigkeit, die über den Eintritt der Reinigungsflüssigkeit I in das Ventil gelangt und über den Austritt der Reinigungsflüssigkeit II dieses wieder verläßt, gleichmäßig in den Leckageraum 6 und die angrenzenden Dichtungsbereiche verteilt und von dort in geordneter Weise gesammelt und abgeführt wird. Über die Sammelkanäle 18a, 18 und die Ablauföffnung 2a erfolgt auch der Austritt der Leckage II.

In Figur 69 ist eine weitere Ausführungsform des Ventils gemäß der Erfindung im Bereich des Leckageraumes 6 und der angrenzenden Ventilgehäuseverbindung 1, 2 dargestellt. Sie unterscheidet sich von jener gemäß Figur 68 dadurch, daß als Dichtungsmittel zwischen den Ventilgehäuseteilen 1,2 einerseits und dem Schließglied 4 bzw. dem Verschlußteil 5 andererseits zwei diskrete Dichtungen 70 und 71 vorgesehen sind. Der Leckageraum 6 wird allein vor der Ausnehmung im Gehäuse 2b zwischen den Dichtungen 70 und 71 gebildet. Während der Leckageraum 6 einen umlaufenden Ringraum darstellt, erstreckt sich der Kanal 16 nahezu über den gesamten Umfang des Leckageraumes 6, wobei der Sammelkanal 18 mit einem Bereich des Leckageraumes 6 verbunden ist, der nicht vom Kanal 16 berandet ist. Die Austrittsöffnung bzw. die -öffnungen 17 sind zweckmäßig derart angeordnet, daß sie von den Dichtungen 70, 71 teilweise begrenzt werden. Dadurch ist eine Reinigung der an die Austrittsöffnungen 17 angrenzenden Dichtungsbereiche möglich. Die Austrittsöffnung 17 kann als umlaufender Ringspalt oder als mehr als eine diskrete, geometrisch definierte Öffnung oder als eine Vielzahl geometrisch nicht definierter Öffnungen ausgebildet sein. Im letztgenannten Falle hat man sich im Extremfall beispielsweise eine aufgerauhte bzw. eine gerasterte oder eine gerändelte oder eine microgewellte Oberfläche vorzustellen, die die Dichtung 70 bzw. 71 berandet. Über die zwischen der jeweiligen Dichtung 70 bzw. 71 und der strukturierten, angrenzenden Oberfläche gebildeten Austrittsöffnungen 17 kann die Reinigungsflüssigkeit über den Kanal 16 gleichmäßig in den Leckageraum 6 verteilt werden, wohingegen ihre Ableitung im Regelfall über den punktförmig am Leckageraum 6 angeschlossenen Sammelkanal 18 erfolgt. Im übrigen entspricht die Anordnung jener gemäß Figur 68 ; eine weitere, in Einzelheiten gehende Beschreibung erübrigt sich daher.

Die Figuren 70, 71, 72 und 73 zeigen, daß die erfindungswesentlichen Merkmale auch auf eine Ventilanordnung anwendbar sind, bei der das Schließglied 4 rotativ bewegt wird. Derartige Ventile werden in der Praxis auch als Scheibenventile benannt. Der Aufbau der Ventilgehäuseteile 1, 2, ihre Verbindung über die Gehäusedichtung 12 und das Verbindungsmittel 13, die Einbettung der Dichtung 7 mit den Abdichtungsstellen 8 und 9, die Ausnehmung der Dichtung 7b, der Verbindungskanal 7a und der Letkageraum 6 sind in der dargestellten Weise Stand der Technik. Die Anwendung des erfindungswesentlichen Merkmals zeigt sich in der Anordnung des Verschlußteiles 5. Dieses weist wenigstens im Bereich seiner Überdeckung des Eintritts des Leckageraumes 6 eine der diesen Bereich überdeckenden Fläche des Schließgliedes 4 kongruente Form auf. Es ist bei der Ausführungsform gemäß Fig. 70 und Fig. 71 mit dem Schließglied 4 fest verbunden. Sein erster Drehweg, gemessen auf dem Bogen, beträgt a* und entspricht in diesem Fall einem Winkel von 90°. Fig. 70 zeigt die Schließstellung des Scheibenventils. Bei einer Drehbewegung des Schließgliedes 4 in der mit ß gekennzeichneten Richtung werden nacheinander die Abdichtungsstellen 8 und 9 freigelegt. In der Offenstellung des Scheibenventils (Fig. 71) befindet sich das Verschlußteil 5 innerhalb der Dichtung 7 und sorgt damit für einen Verschluß des Eintritts in den Leckageraum 6. Die Schaltbewegung erfolgt nicht leckagefrei.

Eine leckagefrei schaltende Ausführung eines Scheibenventils mit dem grundsätzlichen Aufbau nach Fig. 70 zeigen die Fig. 72 und 73. Das Versthlußteil 5 ist relativ beweglich zum Sthließglied 4 auf dessen Drehachse 4a angeordnet. In der Schließstellung des Scheibenventils (Fig. 72) liegt das Verschlußteil 5 dichtend am Schließglied 4 an.

Während auf dem Weg in die Offenstellung (Fig. 73) das Schließglied 4 an seinem Umfang einen auf dem Bogen gemessenen ersten Drehweg a* zurückgelegt, ergibt sich für das Verschlußteil 5 im gleichen Zusammenhang lediglich ein auf dem Bogen gemessener zweiter Drehweg b*. Der Schaltvorgang erfolgt leckagefrei, da das Verschlußteil 5 während der Öffnungsbewegung des Schließgliedes 4 permanent an letzterem dichtend zur Anlage gebracht wird. Das Scheibenventil ist in seinem übrigen Aufbau identisch mit jenem gemäß Figur 70 ; eine detaillierte Beschreibung erübrigt sich daher.

## Ansprüche

1. Ventil mit einem gesteuerten Leckageraum (6), welches mit zwei Abdichtungsstellen (8, 9) ausgestattet ist, die seriell angeordnet sind und in der Schließstellung des Ventils das Überströmen von Fluiden von einem Ventilgehäuseteil (1 bzw. 2) in ein anderes verhindern, mit dem Leckageraum, der zwischen den Abdichtungsstellen angeordnet und über das Ventilgehäuse (1, 2) mit der Umgebung des Ventils verbunden ist, wobei in der Schließstellung des Ventils die Verbindung des Leckageraumes mit einem Innenraum der Ventilgehäuseteile (1, 2) durch ein mit den zwei Abdichtungsstellen zusammenwirkendes Schließglied (4) verschlossen ist, welches schieberartig ausgebildet und translatorisch oder rotativ verschiebbar ist und in Verbindung mit dem Ventilgehäuse die beiden Abdichtungsstellen realisiert, **dadurch gekennzeichnet,** daß ein Verschlußteil (5) vorgesehen ist, welches fest mit dem Schließglied (4) verbunden oder relativ beweglich in Richtung dessen Bewegungsfreiheitsgrades angeordnet ist und welches die Verbindung zwischen dem Leckageraum (6) und dem Innenraum (1, 2) steuert.

2. Ventil mit einem gesteuerten Leckageraum nach Anspruch 1, **dadurch gekennzeichnet,** daß in einer Schließstellung des Ventils das Schließglied (4) derart positioniert ist, daß nur eine der Abdichtungsstellen (8 oder 9) zwischen dem Ventilgehäuse (1, 2) und dem Schließglied (4) vorliegt, und daß über die durch den Teilhub des Schließgliedes (4) freigelegte Abdichtungsstelle (8 oder 9) der Leckageraum (6) mit dem der freigelegten Abdichtungsstelle (8 oder 9) benachbarten Ventilgehäuseteil (2 bzw. 1) verbunden ist.

3. Ventil mit einem gesteuerten Leckageraum nach Anspruch 1 oder 2, **dadurch gekennzeichnet,** daß in der Offenstellung des Ventils das Verschlußteil (5) derart positioniert ist, daß nur eine der Abdichtungsstellen (8 oder 9) zwischen dem Ventilgehäuse (1, 2) und dem Verschlußteil (5) vorliegt, und daß über die durch den Teilhub des Verschlußteils (5) freigelegte Abdichtungsstelle (8 oder 9) der Leckageraum (6) mit dem Innenraum (1 und 2) verbunden ist.

4. Ventil mit einem gesteuerten Leckageraum nach einem der Ansprüche 1 bis 3, **dadurch gekennzeichnet,** daß in der Schließstellung des Ventils das Schließglied (4) und das Verschlußteil (5) in einem einen umlaufenden Spalt (19) bildenden Abstand voneinander angeordnet sind.

5. Ventil mit einem gesteuerten Leckageraum nach einem der Ansprüche 1 bis 3, **dadurch gekennzeichnet,** daß das Verschlußteil (5) mit dem Schließglied (4) in einem Abstand (a, a*) fest verbunden ist, und daß der zwischen dem Schließglied (4) und dem Verschlußteil (5) nutzbare Querschnitt der Öffnungen (4b) dem Nennquerschnitt des Ventils entspricht.

6. Ventil mit einem gesteuerten Leckageraum nach einem der Ansprüche 1 bis 3, **dadurch gekennzeichnet,** daß das Verschlußteil (5) im oder am Schließglied (4) geführt ist, daß eine Feder (20) zwischen Schließglied (4) und Verschlußteil (5) oder zwischen dem Ventilgehäuse (1, 3 bzw. 2) und dem Verschlußteil (5) vorgesehen ist, wodurch eine Mitnahme vom Verschlußteil (5) durch das Schließglied (4) bzw. eine Bewegung des Versthlußteiles (5) mit der letztgenannten Wirkung erfolgt, und daß ein Anschlag (5d) am Verschlußteil (5) vorgesehen ist, der dessen Mitnahme über den Sitzbereich des Ventils hinaus begrenzt.

7. Ventil mit einem gesteuerten Leckageraum nach Anspruch 6, **dadurch gekennzeichnet,** daß eine Stange (5a) mit einem Antriebskolben (5g) verbunden ist, der innerhalb des Schließgliedes (4) dichtend geführt ist und mit letzterem einen Antriebsraum (4g) begrenzt, wobei letzterer über die Stange (4a) mit einem Druckmittelanschluß (48) in Verbindung steht.

8. Ventil mit einem gesteuerten Leckageraum nach einem der Ansprüche 1 bis 7, **dadurch gekennzeichnet**, daß das Verschlußteil (5) wenigstens im Bereich seiner Überdeckung des Leckageraumes (6) eine der diesen Bereich überdeckenden Fläche des Schließgliedes (4) kongruente Form aufweist.

9. Ventil mit einem gesteuerten Leckageraum nach Anspruch 8, **dadurch gekennzeichnet**, daß das Verschlußteil (5) als zylindrischer ringförmiger Körper ausgebildet ist, der gegenüber den Abdichtungsstellen (8,9) die diesbezügliche Form und die Abmessungen des Schließgliedes (4) aufweist.

10. Ventil mit einem gesteuerten Leckageraum nach Anspruch 9, **dadurch gekennzeichnet**, daß das Verschlußteil (5) eine Durchtrittsöffnung (5c) aufweist, die einen dem Nennquerschnitt des Ventils entsprechenden Querschnitt besitzt.

11. Ventil mit einen gesteuerten Leckageraum nach einem der Ansprüche 1 bis 4 oder 7 bis 10, **dadurch gekennzeichnet**, daß das Verschlußteil (5) über Stege (5b) mit einer Stange (5a) verbunden ist, die aus dem Ventilgehäuseteil (1 bzw. 2) herausgeführt ist.

12. Ventil mit einem gesteuerten Leckageraum nach Anspruch 11, **dadurch gekennzeichnet**, daß die Stange (5a) auf bzw. in der das Schließglied (4) betätigenden Stange (4a) gelagert ist.

13. Ventil mit einem gesteuerten Leckageraum nach einem der Ansprüche 5 oder 8 bis 10, **dadurch gekennzeichnet**, daß während der Bewegung des Schließgliedes (4) aus seiner Schließ- in seine Offenstellung oder umgekehrt die zwischen dem Innenraum (1, 2) und dem Leckageraum (6) zeitweise gegebene Verbindung (5c, 7b, 7a, 6 bzw. 5c, 6) durch steuerbare, von der Bewegung des Schließgliedes (4) unmittelbar oder mittelbar betätigte Verschlußmittel geschlossen ist.

14. Ventil mit einem gesteuertem Leckageraum nach Anspruch 13, **dadurch gekennzeichnet**, daß die Verschlußmittel in Bezug auf die Abdichtungsstellen (8, 9) gehäuseseitig angeordnet sind.

15. Ventil mit einem gesteuertem Leckageraum nach Anspruch 13, **dadurch gekennzeichnet**, daß die Verschlußmittel schließgliedseitig angeordnet sind und die Durchtrittsöffnungen (4b) zwischen Schließglied (4) und Verschlußteil (5) verschließen.

16. Ventil mit einem gesteuerten Leckageraum nach einem der Ansprüche 5 oder 8 bis 10, **dadurch gekennzeichnet**, daß während der Bewegung des Schließgliedes (4) aus seiner Schließ- in seine Offenstellung oder umgekehrt die Austrittsöffnung (2a) oder der Sammelkanal (18) durch steuerbare, von der Bewegung des Schließgliedes (4) unmittelbar oder mittelbar betätigte Verschlußmittel geschlossen ist.

17. Ventil mit einem gesteuerten Leckageraum nach einem der Ansprüche 5 oder 8 bis 10, **dadurch gekennzeichnet**, daß zwischen den Abdichtungsstellen (8, 9) ein Kanal (16) und ein zweiter Kanal (16a), die jeweils über eine Anschlußoffnung (15 bzw. 15a) mit der Umgebung des Ventils verbunden sind, nebeneinander, jedoch voneinander getrennt, in den Innenraum der Ventilgehäuseteile (1, 2) ausmünden, daß das Schließglied (4) eine umlaufende Ausnehmung (4d) aufweist, die sich, bezogen auf seine Schließlage, zwischen den Abdichtungsstellen (8, 9) befindet und die im Bereich zwischen der Ausmündung des Kanals (16) und des zweiten Kanals (16a) derart unterbrochen ist, daß das eine Ende der Ausnehmung (4d) nur mit dem kanal (16) und das andere nur mit dem zweiten Kanal (16a) in unmittelbarer Verbindung steht, daß das Verschlußteil (5) eine Ausnehmung (5e) aufweist, deren Enden in der Offenstellung des Ventils, in gleicher Weise wie beim Schließglied (4), die Ausmündung des Kanals (16) und jene des zweiten Kanals (16a) miteinander verbinden, und daß in Richtung des Schaltweges des Schließgliedes (4) zwischen den einander entsprechenden Enden der Ausnehmung (4d bzw. 5e) ein mit der Mantelfläche des Schließgliedes (4) und des Verschlußteiles (5) höhengleicher Steuersteg (5f) vorgesehen ist, der während des Schaltweges die Ausmündung des Kanals (16) und jene des zweiten Kanals (16a) dichtend verschließt.

18. Ventil mit einem gesteuerten Leckageraum nach einem der Ansprüche 1 bis 17, **dadurch gekennzeichnet**, daß wenigstens auf der der Richtung der Öffnungsbewegung abgewandten Seite des Schließgliedes (4) an letzterem ein zylinderförmiger erster Ausgleichskolben (21) angeordnet ist, dessen Durchmessser (D) dem Durchmesser (D) des Schließgliedes (4) möglichst gleich ist, und daß das Schließglied (4) und der Ausgleichskolben (21) über ein Verbindungsstück (23) miteinander verbunden sind, dessen Durchmesser (d) kleiner ist als der Durchmesser (D) des Schließgliedes (4) bzw. des Ausgleichskolbens (21).

19. Ventil mit einem gesteuertem Leckageraum nach Anspruch 18, **dadurch gekennzeichnet**, daß wenigstens ein Verbindungsstück (23) vorgesehen ist, wobei in jedem Falle ein zentrischer Bereich um die Symmetrieachse des ersten Ausgleichskolbens (21) und des Schließgliedes (4) von dem Verbindungsstück bzw. den -stücken (23) frei bleibt.

20. Ventil mit einem gesteuerten Leckageraum nach Anspruch 19, **dadurch gekennzeichnet**, daß die Stange (5a) des Verschlußteils (5) im zentrischen Bereich um die Symmetrieachse des ersten Ausgleichskolbens (21) und des Schließgliedes (4) angeordnet ist.

21. Ventil mit einem gesteuerten Leckageraum nach Anspruch 20, **dadurch gekennzeichnet**, daß die Stange (5a) mittelbar über eine Verbindungstraverse (24) und eine Betätigungsstange (25) auf dem Weg durch das Schließglied (4) und das Verbindungsstück (23) durch den ersten Ausgleichskolben (21) aus dem Ventilgehäuseteil (1 bzw. 2) herausgeführt ist.

22. Ventil mit einem gesteuerten Leckageraum nach Anspruch 20, **dadurch gekennzeichnet**, daß die Stange (5a) unmittelbar durch den ersten Ausgleichskolben (21) aus dem Ventilgehäuseteil (1 bzw.2) herausgeführt ist.

23. Ventil mit einem gesteuerten Leckageraum nach einem der Ansprüche 13 bis 22, **dadurch gekennzeichnet**, daß ein zweiter Ausgleichskolben (22) vorgesehen ist, der sich möglichst durchmessergleich unmittelbar am Schließglied (4) anschließt.

24. Ventil mit einem gesteuerten Leckageraum nach einem der Ansprüche 18 bis 23, **dadurch gekennzeichnet**, daß ein erster Faltenbalg (26) eine erste Durchdringungsstelle (29) zwischen der Stange (5a) und dem Schließglied (4) bzw. dem ersten Ausgleichskolben (21), in das bzw. in den sie hineingeführt ist, stoffschlüssig überbrückt.

25. Ventil mit einem gesteuerten Leckageraum nach einem der Ansprüche 13 bis 24, **dadurch gekennzeichnet**, daß ein zweiter Faltenbalg (27) eine zweite Durchdringungsstelle (30) zwischen dem ersten Ausgleichskolben (21) und dem Ventilgehäuse (1 bzw. 2) stoffschlüssig überbrückt.

26. Ventil mit einem gesteuerten Leckageraum nach Anspruch 25, **dadurch gekennzeichnet**, daß ein dritter Faltenbalg (28) eine dritte Durchdringungsstelle (31) zwischen dem zweiten Ausgleichskolben (22), und dem Ventilgehäuse (2 bzw. 1) stoffschlüssig überbrückt.

27. Ventil mit einem gesteuerten Leckageraum nach einem der Ansprüche 1 bis 17, **dadurch gekennzeichnet**, daß ein vierter Faltenbalg (34) eine vierte Durchdringungsstelle (32) zwischen der Stange (5a) und der Stange (4a) bzw. dem Schließglied (4) stoffschlüssig überbrückt.

28. Ventil mit einem gesteuerten Leckageraum nach einem der Ansprüche 1 bis 17 oder 27, **dadurch gekennzeichnet**, daß ein funfter Faltenbalg (35) eine fünfte Durchdringungsstelle (33) zwischen der gehäuseseitigen Stange (5a bzw. 4a) und dem Ventilgehäuseteil (1 bzw. 2) stoffschlüssig überbrückt.

29. Ventil mit einem gesteuerten Leckageraum nach einem der Ansprüche 5 oder 13 bis 17, **dadurch gekennzeichnet**, daß ein fünfter Faltenbalg (35) eine fünfte Durchdringungsstelle (33) zwischen der Stange (4a) und dem Ventilgehauseteil (1 bzw. 2) stoffschlüssig überbrückt.

30. Ventil mit einem gesteuerten Leckageraum nach einem der Ansprüche 1 bis 29, **dadurch gekennzeichnet**, daß die Abdichtungsstellen (8, 9) durch ventilgehäuseseitig oder schließglied- bzw. verschlußteilseitig angeordnete Dichtungsmittel (7, 70, 71) realisiert werden.

31. Ventil mit einem gesteuerten Leckageraum nach Anspruch 30, **dadurch gekennzeichnet**, daß zwischen den Abdichtungsstellen (8, 9) eine zum Innenraum des Ventilgehäuses (1, 2) offene, umlaufende Ausnehmung (2b bzw. 7b) vorgesehen ist, die ventilgehäuseseitig über wenigstens einen Verbindungskanal (7a) oder wenigstens einen Kanal (16) mit der Umgebung des Ventils verbunden ist.

32. Ventil mit einem gesteuerten Leckageraum nach einem der Ansprüche 30 oder 31, **dadurch gekennzeichnet**, daß die Abdichtungsstellen (8, 9) durch zwei separate Dichtungen (70, 71) realisiert werden.

33. Ventil mit einem gesteuerten Leckageraum nach einem der Ansprüche 30 oder 31, **dadurch gekennzeichnet**, daß die Abdichtungsstellen (8, 9) durch eine einstuckige Dichtung (7) realisiert werden.

34. Ventil mit einem gesteuerten Leckageraum nach einem der Ansprüche 1 bis 33, **dadurch gekennzeichnet**, daß vorzugsweise in der Verbindungsebene zwischen den Ventilgehäusen (1 und 2) und zwischen dem Leckageraum (6) und der Gehäusedichtung (12) zum einen ein Kanal (16) vorgesehen ist, der von den Ventilgehäuseteilen (1, 2) begrenzt wird, der einerseits über wenigstens eine Anschlußöffnung (15) mit der Umgebung des Ventils verbunden ist, und der andererseits über eine Austrittsöffnung (17) in den Leckageraum (6) ausmündet, und daß zum anderen ein Sammelkanal (18 bzw. 18a) vorgesehen ist, der einerseits über wenigstens eine Austrittsöffnung (2a) mit der Umgebung des Ventils verbunden ist, und der andererseits eine Verbindung zum Leckageraum (6) aufweist.

35. Ventil mit einem gesteuerten Leckageraum nach Anspruch 34, **dadurch gekennzeichnet**, daß sich der Kanal (16) nahezu über den gesamten Umfang des Leckageraumes (6) erstreckt, und daß der Sammelkanal (18, 18a) mit einem Bereich des Leckageraumes (6) verbunden ist, der nicht vom Kanal (16) berandet ist.

36. Ventil mit einem gesteuerten Leckageraum nach einem der Ansprüche 34 oder 35, **dadurch gekennzeichnet**, daß die Austrittsöffnung (17) als umlaufender Ringspalt oder als mehr als eine diskrete, geometrisch definierte Öffnung oder als eine Vielzahl geometrisch nicht definierter Öffnungen ausgebildet ist.

37. Ventil mit einem gesteuerten Leckageraum nach einem der Ansprüche 34 bis 36, **dadurch gekennzeichnet**, daß die Austrittsöffnungen (17) derart angeordnet sind, daß sie von den Dichtungen (70, 71) teilweise begrenzt werden.

38. Ventil mit einem gesteuerten Leckageraum nach einem der Ansprüche 34 bis 37, **dadurch gekennzeichnet**, daß die Austrittsöffnungen (17) so gerichtet bzw. ausgebildet sind, daß das über sie geführte Strömungsmittel eine rotative Geschwindigkeitskomponente erfährt.

## Revendications

1. Vanne (1) à espace de fuite commandé (6), qui est équipée de deux zones d'étanchéité (8, 9) disposées en série et empêchant, lorsque la vanne est dans sa position fermée, le passage de fluides d'une partie (1 ou 2) du carter de vanne dans l'autre, et dans laquelle l'espace de fuite est situé entre les zones d'étanchéité et est relié, par l'intermédiaire du carter de vanne (1, 2), à l'environnement de la vanne et, lorsque la vanne est dans sa position fermée, la liaison entre l'espace de fuite et un espace intérieur des parties (1, 2) du carter de vanne est obturée par un organe de fermeture (4), qui coopère avec les deux zones d'étanchéité, est agencé à la manière d'un tiroir déplaçable en translation ou en rotation et forme, en liaison avec le carter de vanne, les deux zones d'étanchéité, caractérisée en ce qu'il est prévu une partie d'obturation (5), qui est reliée rigidement à l'organe de fermeture (4) ou est montée de manière à être déplaçable par rapport à cet organe dans le sens du degré de liberté de déplacement de cet organe et commande la liaison entre l'espace de fuite (6) et l'espace intérieur (1, 2).

2. Vanne à espace de fuite commandé selon la revendication 1, caractérisée en ce que, dans une position fermée de la vanne, l'organe de fermeture (4) est positionné de telle sorte que seule l'une des zones de fermeture (8 ou 9) est présente entre le carter de vanne (1, 2) et l'organe de fermeture (4), et que l'espace de fuite (6) est relié, par l'intermédiaire de la zone d'étanchéité (8 ou 9) libérée par la course partielle de l'organe de fermeture (4), à la partie (2 ou 1) du carter de vanne, voisine de la zone d'étanchéité libérée (8 ou 9).

3. Vanne à espace de fuite commandé selon la revendication 1 ou 2, caractérisée en ce que, la vanne étant dans la position ouverte, la partie d'obturation (5) est positionnée de telle sorte que seule l'une des zones d'étanchéité (8 ou 9) est présente entre le carter de vanne (1, 2) et la partie d'obturation (5), et que l'espace de fuite (6) est relié à l'espace intérieur (1 et 2) par l'intermédiaire de la zone de fuite (8 ou 9) libérée par la course partielle de la partie d'obturation (5).

4. Vanne à espace de fuite commandé selon l'une des revendications 1 à 3, caractérisée en ce que, la vanne étant dans la position fermée, l'organe de fermeture (4) et la partie d'obturation (5) sont situés à une distance réciproque déterminant une fente périphérique (19).

5. Vanne à espace de fuite commandé selon l'une des revendications 1 à 3, caractérisée en ce que la partie d'obturation (5) est reliée rigidement à l'organe de fermeture (4) à une distance (a, a*), et que la section transversale des ouvertures (4b), utilisable entre l'organe de fermeture (4) et la partie d'obturation (5), correspond à la section transversale nominale de la vanne.

6. Vanne à espace de fuite commandé selon l'une des revendications 1 à 3, caractérisée en ce que la partie d'obturation (5) est guidée dans ou sur l'organe de fermeture (4), qu'un ressort (20) est prévu entre l'organe de fermeture (4) et la partie d'obturation (5) ou entre le carter de vanne (1, 3 ou 2) et la partie d'obturation (5), ce qui réalise un entraînement de la partie d'obturation (5) par l'organe de fermeture (4) ou un déplacement de la partie d'obturation (5) avec l'effet indiqué en dernier lieu, et que sur la partie d'obturation (5) est prévue une butée (5d), qui limite l'entraînement de la partie d'obturation au-delà de la zone de siège de la vanne.

7. Vanne à espace de fuite commandé selon la revendication 6, caractérisée en ce qu'une tige (5a) est reliée à un piston d'entraînement (5g), qui est guidé d'une manière étanche à l'intérieur de l'organe de fermeture (4) et limite, avec ce dernier, un espace d'entraînement (4g), qui est relié à travers la tige (4a) à un raccord de fluide sous pression (48).

8. Vanne à espace de fuite commandé selon l'une des revendications 1 à 7, caractérisée en ce que la partie d'obturation (5) comporte, au moins dans la zone où elle recouvre l'espace de fuite (6), une forme congruente avec la surface, qui recouvre cette zone, de l'organe de fermeture (4).

9. Vanne à espace de fuite commandé selon la revendication 8, caractérisée en ce que la partie d'obturation (5) est réalisée sous la forme d'un corps annulaire cylindrique, qui possède, par rapport aux zones d'étanchéité (8, 9), la forme adaptée à ces zones et les dimensions de l'organe de fermeture (4).

10. Vanne à espace de fuite commandé selon la revendication 9, caractérisée en ce que la partie d'obturation (5) possède une ouverture de passage (5c), qui possède une section transversale correspondant à la section transversale nominale de la vanne.

11. Vanne à espace de fuite commandé selon l'une des revendications 1 à 4 ou 7 à 10, caractérisée en ce que la partie d'obturation (5) est reliée par l'intermédiaire de barrettes (5b) à une tige (5a), qui sort de la partie (1 ou 2) du carter de vanne.

12. Vanne à espace de fuite commandé selon la revendication 11, caractérisée en ce que la tige (5a) est montée sur ou dans la tige (4a) actionnant l'organe de fermeture (4).

13. Vanne à espace de fuite commandé selon l'une des revendications 5 ou 8 à 10, caractérisée en ce que, pendant le déplacement de l'organe de fermeture (4) depuis sa position fermée dans sa position ouverte ou inversement, la liaison (5c, 7b, 7a, 6 ou 5c, 6), établie temporairement entre l'espace intérieur (1, 2) et l'espace de fuite (6), est fermée par des moyens commandables d'obturation, actionnés directement ou indirectement par le déplacement de l'organe de fermeture (4).

14. Vanne à espace de fuite commandé selon la revendication 13, caractérisée en ce que les moyens d'obturation sont disposés du côté du carter par rapport aux zones d'étanchéité (8, 9).

15. Vanne à espace de fuite commandé selon la revendication 13, caractérisée en ce que les moyens d'obturation sont disposés du côté de l'organe de fermeture et ferment les ouvertures de passage (4b) entre l'organe de fermeture (4) et la partie d'obturation (5).

16. Vanne à espace de fuite commandé selon l'une des revendications 5 ou 8 à 10, caractérisée en ce que pendant le déplacement de l'organe de fermeture (4) depuis sa position fermée dans sa position ouverte ou inversement, l'ouverture de sortie (2a) ou le canal de collecte (18) est fermé par des moyens commandables d'obturation actionnés directement ou indirectement par le déplacement de l'organe de fermeture (4).

17. Vanne à espace de fuite commandé selon l'une des revendications 5 ou 8 à 10, caractérisée en ce qu'un canal (16) et un second canal (16a), qui sont reliés à l'environnement de la vanne respectivement par l'intermédiaire d'une ouverture de raccordement (15 ou 15a), débouchent côte-à-côte, mais en étant séparés l'un de l'autre, dans l'espace intérieur des parties (1, 2) du carter de vanne, entre les zones d'étanchéité (8, 9), que, dans sa position fermée, l'organe de fermeture (4) possède un évidement périphérique (4d) qui est situé entre les zones d'étanchéité (8, 9), et qui est interrompu dans la zone comprise entre les embouchures de canal (16) et du second canal (16a), de telle sorte qu'une extrémité de l'évidement (4d) est reliée directement seulement au canal (16) et que l'autre est reliée directement seulement au second canal (16a), que la partie d'obturation (5) possède un évidement (5e), dont les extrémités relient entre elles, de la même manière que dans le cas de l'organe de fermeture (4), l'embouchure du canal (16) et celle du second canal (16a), lorsque la vanne est dans la position ouverte, et que, dans la direction du trajet de commutation de l'organe de fermeture (4) entre les extrémités, qui se correspondent, de l'évidement (4d ou 5e) est prévue une barrette de commande (5f), qui possède une hauteur égale à celle de la surface enveloppe de l'organe de fermeture (4) et de la partie d'obturation (5) et ferme de façon étanche l'embouchure du canal (16) et celle du second canal (16e), pendant le trajet de commutation.

18. Vanne à espace de fuite commandé selon l'une des revendications 1 à 17, caractérisée en ce qu'au moins sur le côté, situé à l'opposé du sens de déplacement de l'ouverture, de l'organe de fermeture (4) est monté, sur ce dernier, un premier piston cylindrique de compensation (21), dont le diamètre (D) est autant que possible égal au diamètre (D) de l'organe de fermeture (4), et que l'organe de fermeture (4) et le piston de compensation (21) sont reliés entre eux par l'intermédiaire d'un organe de liaison (23), dont le diamètre (d) est inférieur au diamètre (D) de l'organe de fermeture (4) ou du piston de compensation (21).

19. Vanne à espace de fuite commandé selon la revendication 18, caractérisée en ce qu'il est prévu au moins un organe de liaison (23), et dans chaque cas, le ou les organes de liaison (23) restent en dehors d'une zone centrée autour de l'axe de symétrie du premier piston de compensation (21) et de l'organe de fermeture (4).

20. Vanne à espace de fuite commandé selon la revendication 19, caractérisée en ce que la tige (5a) de la partie d'obturation (5) est disposée dans la zone centrée entourant l'axe de symétrie du premier piston de compensation (21) et de l'organe de fermeture (4).

21. Vanne à espace de fuite commandé selon la revendication 20, caractérisée en ce que la tige (5a) sort de la partie (1 ou 2) du carter de vanne indirectement par l'intermédiaire d'une traverse de liaison (24) et d'une tige d'actionnement (25) qui passent à travers l'organe de fermeture (4) et l'organe de liaison (23) à travers le premier piston de compensation (21).

22. Vanne à espace de fuite commandé selon la revendication 20, caractérisée en ce que la tige sort de la partie (1 ou 2) du carter de vanne, directement à travers le premier piston de compensation (21).

23. Vanne à espace de fuite commandé selon l'une des revendications 13 à 22, caractérisée en ce qu'il est prévu un second piston de compensation (22), qui se raccorde, autant que possible avec le même diamètre, directement à l'organe de fermeture (4).

24. Vanne à espace de fuite commandé selon l'une des revendications 18 à 23, caractérisée en ce qu'un premier soufflet (26) comble, d'une manière matérielle, un premier espace (29) entre la tige (5a) et l'organe de fermeture (4) ou le premier piston de compensation (21), dans lequel il pénètre.

25. Vanne à espace de fuite commandé selon l'une des revendications 13 à 24, caractérisée en ce qu'un second soufflet (27) comble, d'une manière matérielle, un second espace (30) entre le premier piston de compensation (21) et le carter de vanne (1 ou 2).

26. Vanne à espace de fuite commandé selon la revendication 25, caractérisée en ce qu'un troisième soufflet (28) comble, d'une manière matérielle, un troisième espace (31) entre le second piston de compensation (22) et le carter de vanne (2 ou 1).

27. Vanne à espace de fuite commandé selon l'une des revendications 1 à 17, caractérisée en ce qu'un quatrième soufflet (34) comble, d'une manière matérielle, un quatrième espace (32) entre la tige (5a) et la tige (4a) ou l'organe de fermeture (4).

28. Vanne à espace de fuite commandé selon l'une des revendications 1 à 17 ou 27, caractérisée en ce qu'un cinquième soufflet (35) comble, d'une manière matérielle, un cinquième espace (33) entre la tige (5a ou 4a) située du côté du carter et la partie (1 ou 2) du carter de vanne.

29. Vanne à espace de fuite commandé selon l'une des revendications 5 ou 13 à 17, caractérisée en ce qu'un cinquième soufflet (35) comble, d'une manière matérielle, un cinquième espace (33) entre la tige (4a) et la partie (1 ou 2) du carter de vanne.

30. Vanne à espace de fuite commandé selon l'une des revendications 1 à 29, caractérisée en ce que les zones d'étanchéité (8, 9) sont réalisées à l'aide de moyens d'étanchéité (7, 70, 71) situés sur le carter de vanne ou sur l'organe de fermeture ou la partie d'obturation.

31. Vanne à espace de fuite commandé selon la revendication 30, caractérisée en ce qu'entre les zones d'étanchéité (8, 9) est prévu un évidement périphérique (2b ou 7b), qui s'ouvre en direction de l'espace intérieur du carter de vanne (1, 2) et est relié, côté carter de vanne, au moyen d'un canal de liaison (7a) ou d'au moins un canal (16) à l'environnement de la vanne.

32. Vanne à espace de fuite commandé selon l'une des revendications 30 ou 31, caractérisée en ce que les zones d'étanchéité (8, 9) sont réalisées au moyen de deux garnitures d'étanchéité séparées (70, 71).

33. Vanne à espace de fuite commandé selon l'une des revendications 30 ou 31, caractérisée en ce que les zones d'étanchéité (8, 9) sont réalisées au moyen d'une garniture d'étanchéité monobloc (7).

34. Vanne à espace de fuite commandé selon l'une des revendications 1 à 33, caractérisée en ce que de préférence dans le plan de la liaison des parties (1 et 2) du carter de vanne et entre l'espace de fuite (6) et la garniture d'étanchéité (12) du carter est prévu un canal (16), qui est limité par les parties (1, 2) du carter de vanne, et d'une part, est raccordé par l'intermédiaire d'au moins une ouverture de raccordement (15) à l'environnement de la vanne et, d'autre part, débouche, par l'intermédiaire d'une ouverture de sortie (17), dans l'espace de fuite (6), et que, en outre, il est prévu un canal de collecte (18 ou 18a), qui, d'une part, est relié par l'intermédiaire d'au moins une ouverture de sortie (2a) à l'environnement de la vanne et, d'autre part, est relié à l'espace de fuite (6).

35. Vanne à espace de fuite commandé selon la revendication 34, caractérisée en ce que le canal (16) s'étend approximativement sur la totalité du pourtour de l'espace de fuite (6) et que le canal de collecte (18, 18a) est relié à une zone de l'espace de fuite (6), qui n'est pas bordée par le canal (16).

36. Vanne à espace de fuite commandé selon l'une des revendications 34 ou 35, caractérisée en ce que l'ouverture de sortie (17) est réalisée sous la forme d'une fente annulaire circonférentielle ou sous la forme de plus d'une ouverture discrète définie géométriquement ou sous la forme d'une multiplicité d'ouvertures non définies géométriquement.

37. Vanne à espace de fuite commandé selon l'une des revendications 34 à 36, caractérisée en ce que les ouvertures de sortie (17) sont disposées de telle sorte qu'elles sont limitées partiellement par les garnitures d'étanchéité (70, 71).

38. Vanne à espace de fuite commandé selon l'une des revendications 34 à 37, caractérisée en ce que les ouvertures de sortie (17) sont dirigées et agencées de manière à imprimer, au fluide en écoulement guidé à travers elles, une vitesse à composante rotative.

## Claims

1. A valve with a controlled leakage cavity (6) provided with two sealing places (8, 9) disposed in series, which in the closed position of the valve prevent the overflow of fluids from one valve casing part (1 or 2, respectively) into another, the leakage cavity being disposed between the sealing places and connected to the outside of the valve via the valve casing (1, 2), the connection of the leakage cavity to one of the inside spaces of the valve casing parts (1, 2) being closed in the closed position of the valve by means of

22

a closing member (4) cooperating with the two sealing places, which closing member is of slide-like construction and movable by translatory or rotative displacement and which in combination with the valve casing realizes the two sealing places, characterized in that a locking piece (5) is provided which is firmly connected with closing member (4) or is disposed relatively mobile in direction of the freedom of motion of the closing member and which controls the connection between the leakage cavity (6) and the inside space (1, 2).

2. A valve with a controlled leakage cavity according to claim 1, characterized in that in a closed position of the valve the closing member (4) is positioned such that only one of the sealing places (8 or 9) is existing between the valve casing (1, 2) and the closing member (4), and in that via the sealing place (8 or 9) becoming exposed by the partial lift of closing member (4), the leakage cavity (6) is connected to the valve casing part (2 or 1, respectively) adjacent to the exposed sealing place (8 or 9).

3. Valve with a controlled leakage cavity according to claim 1 or 2, characterized in that in the open position of the valve the locking piece (5) is positioned such that only one of the sealing places (8 or 9) is existing between the valve casing (1, 2) and the locking piece (5), and in that via the sealing place (8 or 9) becoming exposed by the partial lift of locking piece (5), the leakage cavity (6) is connected to the inside space (1 and 2).

4. Valve with a controlled leakage cavity according to any one of claims 1 to 3, characterized in that in the closed position of the valve the closing member (4) and the locking piece (5) are disposed in spaced relation to each other, said distance forming a circular gap (19).

5. Valve with a controlled leakage cavity according to any one of claims 1 to 3, characterized in that the locking piece (5) is firmly fixed to closing member (4) at a distance (a, a*), and in that between the closing member (4) and the locking piece (5) the useful cross section of apertures (4b) corresponds to the nominal cross section of the valve.

6. Valve with a controlled leakage cavity according to any one of claims 1 to 3, characterized in that the locking piece (5) is run in or at the closing member (4), in that a spring (20) is provided between closing member (4) and locking piece (5) or between the valve casing (1, 3 or 2 respectively) and the locking piece (5), thus resulting in a locking piece (5) being taken along by the closing member (4) or in a movement of locking piece (5) with the latter effect, and in that a stop (5d) is provided at locking piece (5) limiting its being carried along beyond the seat region of the valve.

7. Valve with a controlled leakage cavity according to claim 6, characterized in that a bar (5a) is connected to a drive piston (5g), which is sealingly run within the closing member (4) and which defines with the latter a drive chamber (4g) which via the bar (4a) communicates with a pressure medium joint (48).

8. Valve with a controlled leakage cavity according to any one of claims 1 to 7, characterized in that at least in the region where it overlaps the leakage cavity (6) the locking piece (5) reveals a shape congruent to the surface of the closing member (4) covering this region.

9. Valve with a controlled leakage cavity according to claim 8, characterized in that the locking piece (5) is designed as cylindrical annular body which with view to the sealing places (8, 9) reveals the respective shape and the dimensions of closing member (4).

10. Valve with a controlled leakage cavity according to claim 9, characterized in that the locking piece (5) comprises an opening (5c) having a cross-section corresponding to the nominal cross section of the valve.

11. Valve with a controlled leakage cavity according to any one of claims 1 to 4 or 7 to 10, characterized in that via legs (5b) the locking piece (5) is connected to a bar (5a) which protrudes from the valve casing part (1 or 2, respectively).

12. Valve with a controlled leakage cavity according to claim 11, characterized in that the bar (5a) is journalled on or in bar (4a) actuating the closing member (4).

13. Valve with a controlled leakage cavity according to any one of claims 5 or 8 to 10, characterized in that during the movement of closing member (4) from its closed to its open position or vice versa, the temporary connection (5c, 7b, 7a, 6 or 5c respectively, 6) between the inside space (1, 2) and the leakage cavity (6) is closed by means of controllable locking means which are activated directly or indirectly by the motion of the closing member (4).

14. Valve with a controlled leakage cavity according to claim 13, characterized in that, in respect of the sealing places (8, 9), the locking means are disposed at the side of the casing.

15. Valve with a controlled leakage cavity according to claim 13, characterized in that the locking means are disposed at the side of the closing member and close the apertures (4b) between closing member (4) and locking piece (5).

16. Valve with a controlled leakage cavity according to any one of claims 5 or 8 to 10, characterized in that during the movement of the closing member (4) from its closed into its open position or vice versa, the outlet opening (2a) or the collection channel (18) are closed by controllable locking means which are acti-

EP 0 279 177 B1

vated directly or indirectly by the motion of closing member (4).

17. Valve with a controlled leakage cavity according to any one of claims 5 or 8 to 10, characterized in that between the sealing places (8, 9) a channel (16) and a second channel (16a), each of which is connected via a connection port (15 or 15a, respectively) to the outside of the valve, both of which discharge side by side but separately from each other into the inside space of the valve casing parts (1, 2), in that the closing member (4) has a circular recess (4d) which, based on its closed position, is located between the sealing places (8, 9) and discontinued in the region between the mouths of the channel (16) and the second channel (16a) in such a manner that the one end of the recess (4d) is in direct connection only with channel (16) and the other end is in direct connection only with the second channel (16a), in that the locking piece (5) has a recess (5e), the ends of which, in the open position of the valve, connect the mouth of channel (16) and that of the second channel (16a) in the same manner as with closing member (4), and that in the direction of the contact travel of the closing member (4) between the respective corresponding ends of the recess (4d or 5e, respectively) there is provided a control ridge (5f) equal in height to the surfaces of closing member (4) and locking piece (5), which sealingly closes the mouth of channel (16) and that of second channel (16a) during the contact travel.

18. Valve with a controlled leakage cavity according to any one of claims 1 to 17, characterized in that at least on that side of closing member (4) averted from the direction of the opening movement there is arranged at the closing member (4) a cylindrical first compensating piston (21), the diameter (D) of which is as equal to diameter (D) of closing member (4) as possible and in that the closing member (4) and the compensating piston (21) are connected to each other via a connecting piece (23) the diameter (d) of which is smaller than the diameter (D) of either the closing member (4) or the compensating piston (21).

19. Valve with a controlled leakage cavity according to claim 18, characterized in that there is provided at least one connecting piece (23), with a centric area around the axis of symmetry of the first compensating piston (21) and the closing member (4) remaining clear in all instances from the connecting piece or pieces (23), respectively.

20. Valve with a controlled leakage cavity according to claim 19, characterized in that the bar (5a) of locking piece (5) is disposed in the centric area around the axis of symmetry of the first compensating piston (21) and the closing member (4).

21. Valve with a controlled leakage cavity according to claim 20, characterized in that the bar (5a) is led out of the valve casing part (1 or 2, respectively) indirectly via a connecting traverse (24) and an actuating rod (25) on the way through the closing member (4) and the connecting piece (23) through the first compensating piston (21).

22. Valve with a controlled leakage cavity according to claim 20, characterized in that the bar (5a) is led out of the valve casing part (1 or 2, respectively) directly through the first compensating piston (21).

23. Valve with a controlled leakage cavity according to any one of claims 13 to 22, characterized in that there is provided a second compensating piston (22) which directly follows closing member (4) and the diameter of which is as equal as possible to that of the piston.

24. Valve with a controlled leakage cavity according to any one of claims 18 to 23, characterized in that a first bellows (26) bridges material-closed a first penetration gap (29) between the bar (5a) and the closing member (4) or the first compensating piston (21), respectively, into which it is extended.

25. Valve with a controlled leakage cavity according to any one of claims 13 to 24, characterized in that a second bellows (27) bridges material-closed a second penetration gap (30) between the first compensating piston (21) and the valve casing (1 or 2, respectively).

26. Valve with a controlled leakage cavity according to claim 25, characterized in that a third bellows (28) bridges material-closed a third penetration gap (31) between the second compensating piston (22) and the valve casing (2 or 1, respectively).

27. Valve with a controlled leakage cavity according to any one of claims 1 to 17, characterized in that a fourth bellows (34) bridges material-closed a fourth penetration gap (32) between the bar (5a) and the bar (4a) or the closing member (4), respectively.

28. Valve with a controlled leakage cavity according to any one of claims 1 to 17 or 27, characterized in that a fifth bellows (35) bridges material-closed a fifth penetration gap (33) between the bar (5a or 4a, respectively) on the side of the casing and the valve casing part (1 or 2, respectively).

29. Valve with a controlled leakage cavity according to any one of claims 5 or 13 to 17, characterized in that a fifth bellows (35) bridges material-closed a fifth penetration gap (33) between the bar (4a) and the valve casing part (1 or 2, respectively).

30. Valve with a controlled leakage cavity according to any one of claims 1 to 29, characterized in that the sealing places (8, 9) are realized by sealing means (7, 70, 71) disposed either at the side of the valve casing or at the side of the closing member or of the locking piece, respectively.

24

31. Valve with a controlled leakage cavity according to claim 30, characterized in that between the sealing places (8, 9) there is provided a circular recess (2b or 7b, respectively) open towards the interior of the valve casing (1, 2), which is connected to the outside of the valve on the side of the valve casing via at least one connection channel (7a) or at least one channel (16).

32. Valve with a controlled leakage cavity according to claim 30 or 31, characterized in that the sealing places (8, 9) are realized by two separate seals (70, 71).

33. Valve with a controlled leakage cavity according to claim 30 or 31, characterized in that the sealing places (8, 9) are realized by an integral seal (7).

34. Valve with a controlled leakage cavity according to any one of claims 1 to 33, characterized in that preferably on the connecting level between the valve casings (1 and 2) and between the leakage cavity (6) and the casing seal (12) there is on the first hand provided a channel (16) which is defined by the valve casing parts (1, 2), which channel on the one hand is connected to the outside of the valve via at least one connection port (15), and which on the other hand opens via a discharge mouth (17) into leakage cavity (6), and that on the other hand there is provided a collection channel (18 or 18a, respectively), which on the one hand is connected with the outside of the valve via at least one outlet opening (2a) and which on the other hand comprises a connection to the leakage cavity (6).

35. Valve with a controlled leakage cavity according to claim 34, characterized in that channel (16) extends almost over the entire circumference of leakage cavity (6) and that the collection channel (18, 18a) is connected to a region of the leakage cavity (6), which is not bounded by channel (16).

36. Valve with a controlled leakage cavity according to claim 34 or 35, characterized in that the discharge mouth (17) is designed as a circular ring gap or as more than one discretely, geometrically defined opening, or as a plurality of geometrically undefined openings.

37. Valve with a controlled leakage cavity according to claims 34 to 36, characterized in that the discharge mouths (17) are disposed in such a manner that they are partly bounded by the seals (70, 71).

38. Valve with a controlled leakage cavity according to claims 34 to 37, characterized in that the discharge mouths (17) are directed or designed such that the flow medium flowing therethrough is imparted a rotative velocity component.

Fig.1    Fig.2    Fig.3    Fig.4

Fig.5    Fig.6    Fig.7    Fig.8

Fig.9    Fig.10    Fig.11    Fig.12

Fig.13    Fig.14    Fig.15    Fig.16

FIG.17

FIG.18

FIG.19                    FIG.20

Fig.21                    Fig.22

Fig.23

Fig.24

Fig.25                    Fig.26

21

1

29

26

5a

5

4

4f

2

V

Fig.27          Fig.28

21

30

27

28

31

22

V

Fig.29          Fig.30

5a

32

5b

4a

34

5

Fig.31          Fig.32

V

1

33

5a

35

32

5

34

4a

2

Fig.33          Fig.34

V

1, 3

20

5d

4e

20

Fig.47

Fig.35

Fig.36

Fig.37

Fig.38

Fig.39

Fig.40

20

2

Fig.41

Fig.42

Fig.43

Fig.44

Fig.45

Fig.46

4a

1

4e

20

5d

5b

5

4

**Fig.48**

3

1

20

5

**Fig.49**

D    21

1

d

4a

20

5

4

D

22

D

2

**Fig.50**

Fig.51          Fig.52

Fig.53          Fig.54

Fig.55　　　　　Fig.56

Fig.57          Fig.58

4

8

7b

7a

h2

h1

6

2a

7

9

2

IV

FIG.59

1

IV

5

7

6

7a

7b

2a

4

9

5c

8

H2

H3

H1

FIG.60

Fig.61          Fig.62

1

4a

5

4c

4b

a

a

4c

4

5

2

5c

7a

7b

6

2a

V

FIG.63          FIG.64

44

Fig.67

Fig.65          Fig.66

FIG.68

Fig.69

FIG.70

FIG.71

FIG.72

FIG.73